# EUROPEAN PATENT SPECIFICATION

(11) **EP 1 760 946 B1**
(45) Date of publication and mention of the grant of the patent: **16.08.2017**
(21) Application number: 06018646.7
(22) Date of filing: 06.09.2006
(51) Int. Cl.: H04W 72/12

(54) **METHOD AND SYSTEM FOR INTEGRATING A CELLULAR NETWORK AND A UBIQUITOUS NETWORK**
VERFAHREN UND SYSTEM ZUM INTEGRIEREN VON EINEM ZELLULAREN NETZ UND EINEM ALLGEGENWÄRTIGEN NETZ
PROCÉDÉ ET SYSTÈME POUR INTÉGRER UN RÉSEAU CELLULAIRE ET UN RÉSEAU OMNIPRÉSENT

(30) Priority: 06.09.2005 CN 200510098416
(43) Date of publication of application: 07.03.2007
(73) Proprietor: NTT DoCoMo, Inc., Chiyoda-Ku Tokyo 100-6150 (JP)
(72) Inventor: Chen, Lan, 7/F, Raycom Infotech Park Tower A, Haidian District, Beijing, 100080 (CN); Kayama,Hidetoshi, 7/F, Raycom Info. Park Tower A, Haidian District, Beijing, 100080 (CN)
(74) Representative: Stöckeler, Ferdinand

(56) References cited:
- EP-A1- 1 545 139
- WO-A1-2005/060182
- US-A- 5 612 948

## Description

### Field of the Invention

The present invention relates to a method and device for network convergence, and more particularly to a method and device for integrating a cellular network and a ubiquitous network.

### Background of the Invention

Currently, the communication terminals with low transmitting power, such as the terminals in the wireless LAN and PAN (Personal Area Network), have obtained more and more applications and thereby forming network everywhere, i.e. a ubiquitous network. Since the ubiquitous network has obtained more and more applications, it is important to integrate the ubiquitous network and the cellular network together so that the mobile users may conveniently access the large amount of resources in the ubiquitous network.

The traditional methods for integrating a ubiquitous network and a cellular network include the dual-mode terminal method, which uses the dual-mode terminal to relay the information in the ubiquitous network. However, this method requires the terminal to turn on the dual-mode transmitters and receivers. Although this method can greatly reduce the interference between the two modes, it lacks compatibility in different systems and this kind of terminal costs too much power.

US5612948 A discloses high bandwidth communication network and method.

WO2005060182 A1 discloses a cellular communication system.

EP1545139 A1 discloses method and system to provide a continous wireless connection using a MS as relay.

The traditional integration methods also include the multi-hop method. In the TDD based multi-hop communication, especially when the home antenna is used, great interference in the slot of the reverse communication will be created. In the multi-hop communication based on FDD, since independent channel resources have to be provided for the relay link (home antenna)s, the resource usage ratio will decrease. In addition, in this method, the mobile terminal relays the packets from the ubiquitous terminal to the base station and both the uplink and the downlink have to be guaranteed before the communication establishes. This method cannot meet the requirement for the future terminals to collect information from the around ubiquitous terminals (since the packets are only transmitted from the ubiquitous terminals to the mobile terminal).

### Brief Summary of the Invention

The invention is defined in the independent claims. Preferred embodiments are defined in the dependent claims. A method for integrating a ubiquitous network and a cellular network, wherein a communication between a mobile terminal and a base station is a duplex communication, the communication mode is time division multiplexing, and the mobile terminal in the cellular network communicates with the ubiquitous terminal by random accessing, polling or reservation. Said method includes the following steps:
the mobile terminal determining whether there are packets to be transmitted to the base station;
if there are packets to be transmitted to the base station, the mobile terminal transmitting the reservation request signal to the base station,
after receiving the reservation requests from all the mobile terminals, the base station generating uplink slot resource allocation information for the mobile terminal and the ubiquitous terminal and transmitting said information to the mobile terminals, and
after receiving said information, the mobile terminals which have packets to be transmitted transmitting the uplink packets;
if there are no packets to be transmitted to the base station, the mobile terminal receiving the slot allocation result transmitted from the base station,
the mobile terminals transmitting the notification of the start and end slots of the ubiquitous network resource to the around ubiquitous terminals when the ubiquitous network slot begins,
after receiving said notification, the ubiquitous terminal starting the communication with the mobile terminal, the mobile terminal receiving the packets from the ubiquitous terminal, processing the received packets, and storing the packets to be transferred to the base station in a buffer, and
the mobile terminal determining whether there are packets to be transmitted to the base station at the uplink slot of the next frame.

When the access modes of the mobile terminal and the ubiquitous terminal are the same, the technical solution will be as the following:
the mobile terminal determining whether there are packets to be transmitted to the base station;
if there are packets to be transmitted to the base station, the mobile terminal transmitting a reservation request signal to the base station,
after receiving the reservation requests from all the mobile terminals, the base station generating uplink slot resource allocation information for the mobile terminal and the ubiquitous terminal and transmitting the information through broadcast channels, and
after receiving the information, the mobile terminal which have packets to be transmitted transmitting the uplink packets, and after receiving the information, the ubiquitous terminal starting the communication with the mobile terminal in available slots of the ubiquitous network; and
if there are no packets to be transmitted to the base station, the mobile terminal receiving the slot allocation result transmitted from the base station,
the mobile terminal starting the communication with the ubiquitous terminal during the ubiquitous network slots, processing the packets received from the ubiquitous terminal and storing the packets to be transferred to the base station in a buffer, and
the mobile terminal determining whether there are packets to be transmitted to the base station at the uplink slot of the next frame.

When the communication mode is frequency division multiplexing, said method includes the following steps:
the mobile terminal determining whether there are packets to be transmitted to the base station;
if there are packets to be transmitted to the base station, the mobile terminal transmitting a reservation request to the base station,
after receiving the reservation requests from all the mobile terminals, the base station generating uplink frequency band resource allocation information for the mobile terminal and the ubiquitous terminal and transmitting the information to the mobile terminals through the transmitter, and
after receiving said information, the mobile terminals which have packets to be transmitted transmitting the uplink packets; and
if there are no packets to be transmitted to the base station, the mobile terminal receiving the frequency band allocation result transmitted from the base station,
the mobile terminals transmitting ubiquitous network resource allocation information to the around ubiquitous terminals at the ubiquitous network frequency band and starting the communication with the ubiquitous network,
after receiving said information, the ubiquitous terminal starting the communication with the mobile terminal, and the mobile terminal processing the packets received from the ubiquitous terminals and storing the packets to be transferred to the base station in a buffer, and
the mobile terminal determining whether there are packets to be transmitted to the base station at the uplink frequency band of the next frame.

When the access modes of the mobile terminal and the ubiquitous terminals are the same, the technical solution will be as the following:
the mobile terminal determining whether there are packets to be transmitted to the base station;
if there are packets to be transmitted to the base station, the mobile terminal transmitting a reservation request signal to the base station,
after receiving the reservation requests from all the mobile terminals, the base station generating uplink frequency band resource allocation information for the mobile terminal and the ubiquitous terminal and broadcasting said information, and
after receiving said information, the mobile terminals which have packets to be transmitted transmitting the uplink packets, and after receiving said information, the ubiquitous terminals starting the communication with the mobile terminals in the ubiquitous network frequency band; and
if there are no packets to be transmitted to the base station, the mobile terminal receiving the frequency band allocation result transmitted from the base station,
the mobile terminal starting communication with the ubiquitous terminal during the ubiquitous network frequency band, the mobile terminal processing the packets received from the ubiquitous terminals and storing the packets to be transferred to the base station in a buffer, and
the mobile terminal determining whether there are packets to be transmitted to the base station at the uplink frequency band of the next frame.

When the communication mode between the base station and the mobile terminal is the packet multiplexing, and the ubiquitous terminals communicate with the mobile terminals by random accessing, polling or reservation, said method includes the following steps:
the mobile terminal determining whether there are packets to be transmitted to the base station;
if there are packets to be transmitted to the base station, the mobile terminal randomly selecting an access channel to directly transmit the uplink packets to the base station; and
if there are no packets to be transmitted to the base station, the mobile terminals have no packets to be transmitted or have already transmitted the uplink packets monitoring the multiple uplink channels simultaneously,
the mobile terminal communicating with the neighboring ubiquitous terminal, and
the mobile terminal processing the packets received from the ubiquitous terminal and storing the packets to be transferred to the base station in a buffer.

The mobile terminals and the ubiquitous terminals can randomly access the communication by sending RTS and CTS; it is not necessary for them to send RTS and CTS, since the terminal has packets to transmit will monitor the channel first. If the mobile terminal finds no terminal is transmitting data, it will wait DIFS and then transmits the packets, if it finds a terminal is transmitting the packets, it will wait until that terminal finishes transmitting and then waits DIFS and starts to transmit the packets after the backoff period. This method can be realized through the current random access device.

The communication between the mobile terminals and the ubiquitous terminals can be in the central control mode, such as polling and reservation.

Said duplex mode can be the time division duplex or the frequency division duplex.

Said mobile terminal stores the received packets which are transmitted from the base station to the ubiquitous terminal in the buffer, and when the mobile terminal communicates with the ubiquitous terminal, it transfers the packets to the ubiquitous terminal. An illustration of the invention provides a communication system, a base station, a mobile terminal and a ubiquitous terminal, in which the transmitter and the receiver in the mobile terminal and the base station perform time division duplex communication function in time division multiplexing mode, wherein, the mobile terminal also includes: an uplink signal reservation unit (404), a ubiquitous network resource notification unit (405), a downlink instruction identifier (406) and a buffer (409), in which the uplink signal reservation unit (404) is connected with the transmitter and is used to generate a reservation request,
the ubiquitous network resource notification unit (405) is connected with said transmitter and is used to transmit ubiquitous network resource notification information and a slot for communication between the transmitter/ receiver and the ubiquitous terminal or only a slot for communication between the transmitter/receiver and the ubiquitous terminal at a ubiquitous network slot notified by the base station,
the downlink instruction identifier (406) is connected with the receiver and is used to identify a downlink instruction from the base station and to transmit the resource allocation information about the ubiquitous terminal to the ubiquitous network resource notification unit (405), and
the buffer (409) is connected with said transmitter and said receiver and is used to store the received packets which are transmitted from the ubiquitous network or which are transmitted from the base station to the ubiquitous terminal;
the ubiquitous terminal includes: a ubiquitous network resource notification instruction identifier (408) and a communication control unit (407), in which the ubiquitous network resource notification instruction identifier (408) is connected with the transmitter and the communication control unit (407) and is used to identify an instruction of the ubiquitous network resource start and end slots, which are transmitted by the ubiquitous network resource notification unit (405) of the mobile terminal to the around ubiquitous terminals at the beginning of the ubiquitous network slot, or an instruction of the ubiquitous network resource allocation information transmitted by the base station, and is used to transmit said instruction to the communication control unit (407), and
the communication control unit (407) is used to control said ubiquitous terminal to communicate with said mobile terminal according to the notification instruction; and
the base station also includes: a reservation request identifier (403), a cellular ubiquitous resource allocator (401) and a resource allocation signal generator (402), in which the reservation request identifier (403) is connected with the transmitter and the cellular ubiquitous network resource allocator (401) and is used to receive a uplink reservation packet signal and to transmit the information in said signal to the cellular ubiquitous resource allocator (401),
the cellular ubiquitous resource allocator (401) is used to generate the slot resource allocation information for the mobile terminal and the ubiquitous terminal and is used to transmit said information to the resource allocation signal generator (402), and
the resource allocation signal generator (402) is used to generate the resource allocation signal. An illustration of the invention provides a communication system, a base station, a mobile terminal and a ubiquitous terminal, in which the transmitter and the receiver in the mobile terminal and the base station perform frequency division duplex communication function in frequency division multiplexing mode, wherein,
the mobile terminal also includes: an uplink signal reservation unit (804), a ubiquitous network resource notification unit (805), a downlink instruction identifier (806) and a buffer (809), in which the uplink signal reservation unit (804) is connected with the cellular transmitter and is used to transmit the number of the uplink reservation packets and the packet data needed to be transmitted of the mobile terminal,
the ubiquitous network resource notification unit (805) is connected with the ubiquitous transmitter and is used to transmit an ubiquitous network resource notification instruction and a frequency band for communication between the ubiquitous transmitter/ receiver and the ubiquitous terminal, or only a frequency band for communication between the transmitter/receiver and the ubiquitous terminal at the ubiquitous network frequency band notified by the base station,
the downlink instruction identifier (806) is connected with the receiver and is used to identify a downlink instruction from the base station and to transmit the resource allocation information about the ubiquitous terminal to the ubiquitous network resource notification unit (805), and
the buffer(809) is connected with said cellular transmitter, said ubiquitous transmitter and said receiver and is used to store the packets which are transmitted from the ubiquitous terminal or are transmitted from the base station to the ubiquitous terminal;
the ubiquitous terminal includes: a ubiquitous network resource notification instruction identifier (808) and a communication control unit (807), in which the ubiquitous network resource notification instruction identifier (808) is connected with the transmitter and the communication control unit (807) and is used to identify a ubiquitous network resource allocation information instruction from the ubiquitous network resource notification unit (805) of the mobile terminal or from the base station, and is used to transmit said instruction to the communication control unit (807), and
the communication control unit (807) is used to control said ubiquitous terminal to communicate with said mobile terminal according to the specified frequency band in the notification instruction; and
the base station also includes: a reservation request identifier (803) and a cellular ubiquitous resource allocator (801), in which the reservation request identifier (803) is connected with the transmitter and the cellular ubiquitous network resource allocator (801) and is used to receive a uplink reservation signal and to transmit the information in said signal to the cellular ubiquitous resource allocator (801), and
the cellular ubiquitous resource allocator (801) is used to generate frequency band resource allocation information for the mobile terminal and the ubiquitous terminal according to the uplink reservation packet signals from all the mobile terminals and the counted ubiquitous network available resource.

The present invention provides a communication system, a base station, a mobile terminal and a ubiquitous terminal, in which the transmitter and the receiver in the mobile terminal and the base station perform time or frequency division duplex communication function in packet multiplexing mode, wherein,
the mobile terminal further comprises a buffer (1209), which is connected with each transmitter and receiver and is used to store packets which are transmitted from the base station to the ubiquitous terminal or are transmitted from the ubiquitous terminal to the base station.

In the system, said mobile terminal further comprises two RTS signal identification units (1203, 1205), two communication control units (1204, 1206), and a random channel selecting unit (1202), in which the RTS signal identification units (1203, 1205) are used to respectively identify the RTS signal from the ubiquitous terminal and from the base station and each RTS signal identification unit (1203, 1205) is connected with a communication control unit (1204, 1206) and a receiver,
each of the communication control units (1204, 1206) is connected with a transmitter and is used to control the communication between the mobile terminal and the ubiquitous terminal and that between the mobile terminal and the base station, and
the random channel selecting unit (1202) is connected with an uplink packet unit (1201) and every transmitter and is used to randomly select the channel to transmit the uplink packets; and
said ubiquitous terminal comprises a CTS signal identification unit (1207) and a communication control unit (1208), in which the CTS signal identification unit (1207) is connected with the receiver and the communication control unit (1208) and is used to identify the CTS signal from the mobile terminal and to transmit the CTS signal to the communication control unit (1208), and
the communication control unit (1208) is connected with the transmitter and is used to control the communication between said ubiquitous terminal and the mobile terminal.

In the above system, it is not necessary for the mobile terminal to include a RTS signal identification unit and also it is not necessary for the ubiquitous terminal to include the CTS signal identification unit but both of them include the unit for listening to the channel; the terminal has packets to transmit will monitor the channel first, if it finds no terminal is transmitting data, it will wait DIFS and then transmits the packets, if it finds a terminal is transmitting the packets, it will wait until that terminal finishes transmitting and then waits DIFS and starts to transmit the packets after the backoff period. An illustration of the invention provides a communication system, a base station, a mobile terminal and a ubiquitous terminal, in which the transmitter and the receiver in the mobile terminal and the base station perform frequency division duplex communication function in time division multiplexing mode, wherein,
the mobile terminal also includes: an uplink signal reservation unit (1404), a ubiquitous network resource notification unit (1405), a downlink instruction identifier (1406) and a buffer (1409), in which the uplink signal reservation unit (1404) is connected with the transmitter and is used to transmit the number of the uplink reservation packets,
the ubiquitous network resource notification unit (1405) is connected with said transmitter and is used to transmit ubiquitous network resource notification information and a slot for communication between the transmitter/receiver and the ubiquitous terminal or only a slot for communication between the transmitter/receiver and the ubiquitous terminal at the ubiquitous network slot notified by the base station,
the downlink instruction identifier (1406) is connected with the cellular receiver and is used to identify a downlink instruction from the base station and to transmit the resource allocation information about the ubiquitous terminal to the ubiquitous network resource notification unit (1405), and
the buffer (1409) is connected with said transmitter and said ubiquitous receiver and is used to store the packets which are transmitted from the ubiquitous network or are transmitted from the base station to the ubiquitous terminal;
the ubiquitous terminal includes: a ubiquitous network resource notification instruction identifier (1408) and a communication control unit (1407), in which the ubiquitous network resource notification instruction identifier (1408) is connected with the transmitter and the communication control unit (1407) and is used to identify an instruction of the ubiquitous network resource start and end slots, which are transmitted from the ubiquitous network resource notification unit (1405) of the mobile terminal to the around ubiquitous terminals at the beginning of the ubiquitous network slot, or an instruction of the ubiquitous network resource allocation information transmitted by the base station, and is used to transmit said instruction to the communication control unit; and
the communication control unit (1407) is used to control said ubiquitous terminal to communicate with said mobile terminal according to the notification instruction; and
the base station also includes: a reservation request identifier (1403) and a cellular ubiquitous resource allocator (1401), in which the reservation request identifier (1403) is connected with the transmitter and the cellular ubiquitous network resource allocator (1401) and is used to receive a uplink reservation packet signal and to transmit the information in said signal to the cellular ubiquitous resource allocator (1401), and
the cellular ubiquitous resource allocator (1401) is used to generate slot resource allocation information for the mobile terminal and the ubiquitous terminal according to the uplink reservation packet signals from all the mobile terminals and the counted ubiquitous network available resource. An illustration of the invention provides a communication system, a base station, a mobile terminal and a ubiquitous terminal, in which the transmitter and the receiver in the mobile terminal and the base station perform a frequency division duplex communication function in frequency division multiplexing mode, wherein,
the mobile terminal also includes: an uplink signal reservation unit (1604), a downlink instruction identifier (1606), a ubiquitous network resource notification unit (1605), a ubiquitous network receiver (1610), a ubiquitous network transmitter (1611) and a buffer (1609), in which the uplink signal reservation unit (1604) is connected with the cellular transmitter and is used to transmit the number of the uplink reservation packets,
the downlink instruction identifier (1606) is connected with the cellular receiver and is used to identify a downlink instruction from the base station and to transmit resource allocation information about the ubiquitous terminal to the ubiquitous network resource notification unit (1605),
the ubiquitous network resource notification unit (1605) is connected with the ubiquitous network transmitter (1611) and is used to transmit ubiquitous network resource notification information and a slot for the communication between the ubiquitous network transmitter/receiver and the terminal or only a slot for the communication between the ubiquitous network transmitter/receiver and the terminal at the ubiquitous network frequency band notified by the base station,
the ubiquitous network receiver (1610) is used to receive the packets from the ubiquitous network and to store the packets in the buffer (1609),
the ubiquitous network transmitter (1611) is used to transmit the information to the ubiquitous network, and
the buffer (1609) is connected with said cellular transmitter, said cellular receiver, said ubiquitous network receiver and said ubiquitous network transmitter and is used to store the packets which are transmitted from the ubiquitous terminal or are transmitted from the base station to the ubiquitous terminal;
the ubiquitous terminal includes: a ubiquitous network resource notification instruction identifier (1608) and a communication control unit (1607), in which the ubiquitous network resource notification instruction identifier (1608) is connected with the transmitter and the communication control unit (1607) and is used to identify a ubiquitous network resource allocation information instruction from the ubiquitous network resource notification unit (1605) of the mobile terminal or from the base station, and is used to transmit said instruction to the communication control unit (1607), and
the communication control unit (1607) is used to control said ubiquitous terminal to communicate with said mobile terminal according to the specified frequency band in the notification instruction; and
the base station also includes: a reservation request identifier (1603) and a cellular ubiquitous resource allocator (1601), in which the reservation request identifier (1603) is connected with the transmitter and the cellular ubiquitous network resource allocator (1601) and is used to receive the uplink reservation signal and to transmit the information in said signal to the cellular ubiquitous resource allocator (1601), and
the cellular ubiquitous resource allocator (1601) is used to generate frequency band resource allocation information for the mobile terminal and the ubiquitous terminal according to the uplink reservation packet signals from all the mobile terminals and the accounted ubiquitous network available resource.

The above technical solution of the present invention integrates the cellular network and the ubiquitous network effectively, which not only saves the energy sources but also improves the frequency usage ratio. In addition, the ubiquitous network resource can be adaptively adjusted according to the amount of the uplink packets in the cellular network so that the adaptive convergence can be realized.

### Brief Description of the Drawings

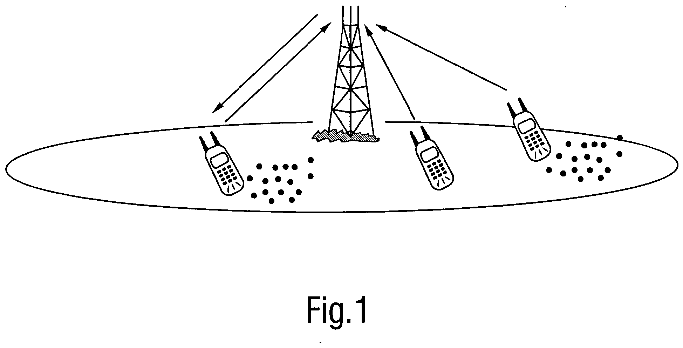

Figure 1 shows the application scenario according to the present invention;
Figure 2 is a schematic diagram showing the TDD/TD mode in the embodiments 1a and 1b according to the present invention;
Figure 3 is the flow chart showing the processing flow in the embodiments 1a and 4a according to the present invention;
Figure 4 is a diagram showing the architecture of the embodiments 1a and 1b according to the present invention;
Figure 5 is a flow chart showing the processing flow in the embodiments 1b and 4b according to the present invention;
Figure 6 is a schematic diagram showing the TDD/TD mode in the embodiments 2a and 2b according to the present invention;
Figure 7 is a flow chart showing the processing flow in the embodiments 2a and 5a according to the present invention;
Figure 8 is a diagram showing the architecture of the embodiments 2a and 2b according to the present invention;
Figure 9 is a flow chart showing the processing flow in the embodiments 2b and 5b according to the present invention;
Figure 10 is a schematic diagram showing the TDD/TD mode in the embodiment 3 according to the present invention;
Figure 11 is a flow chart showing the processing flow in the embodiments 3 and6 according to the present invention;

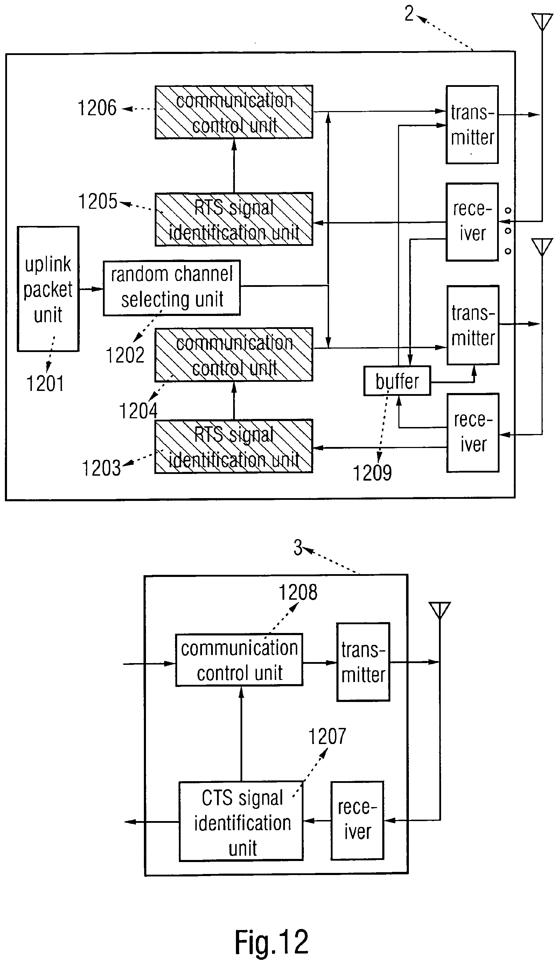

Figure 12 is a diagram showing the architectures of the mobile terminal and the ubiquitous terminal in the embodiments 3 and 6 according to the present invention;
Figure 13 is a schematic diagram showing the FDD/TD mode in the embodiments 4a and 4b according to the present invention;
Figure 14 is a diagram showing the architectures of the base station, the mobile terminal and the ubiquitous terminal in the embodiments 4a and 4b according to the present invention;
Figure 15 is a schematic diagram showing the FDD/FD mode in the embodiments 5a and 5b according to the present invention;
Figure 16 is a diagram showing the architectures of the base station, the mobile terminal and the ubiquitous terminal in the embodiments 5a and 5b according to the present invention;
Figure 17 is a schematic diagram showing the FDD/PD mode in the embodiment 6 according to the present invention;
Figure 18(a) and 18(b) show the traditional random access methods;
Figure 19(a) and 19(b) are schematic diagrams showing the traditional central control.

### Detailed Description of the Invention

The present invention will be further illustrated with reference to the drawings.

The downlink flow of the present invention is the same with the traditional one, in which the base station transmits the packets to the mobile terminal by the downlink. If there are packets to be transmitted from the base station to the ubiquitous terminal, when the mobile terminal and the ubiquitous terminal adopt the same mode, the base station will transmit the packets to the ubiquitous terminal directly; and when the mobile terminal and the ubiquitous terminal adopt different modes, the mobile terminal will transfer the packets to the ubiquitous terminal. Therefore, the present invention will not describe the downlink processing in detail, and since the corresponding traditional communication method is used in the downlink communication, the present invention will only describe for the uplink in detail.

### Embodiment 1a

[TDD/TD] the cellular network uses the time division duplex (TDD) mode. The ubiquitous network and the cellular network are combined in the time divided multiplex (TD) mode, and they adopt different access modes. The cellular network access mode can be WCDMA while the ubiquitous network access mode can be UWB or bluetooth. The differences between the ubiquitous terminal and the mobile terminal are embodied in the transmitter and the receiver. The transmitter and the receiver related in the present invention have all the functions of the base station and the terminal in the WCDMA system in the prior art, such as the function of transmitting data, receiving data, and processing data. For example, if the communication mode is WCDMA, the base station and the terminal according to the present invention will have all the functions of the base station and terminal in the WCDMA system, in which the functions of signal processing relative to transmission, modulation and transmission are all realized by the transmitter in the present invention; the functions of receiving signal, demodulation and relative signal processing are all realized by the receiver in the present invention.

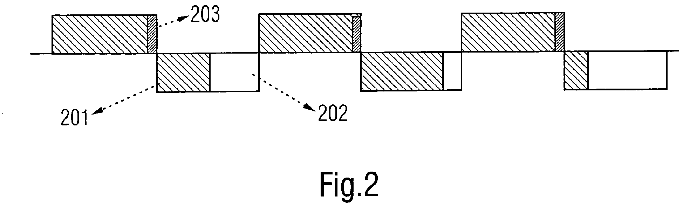

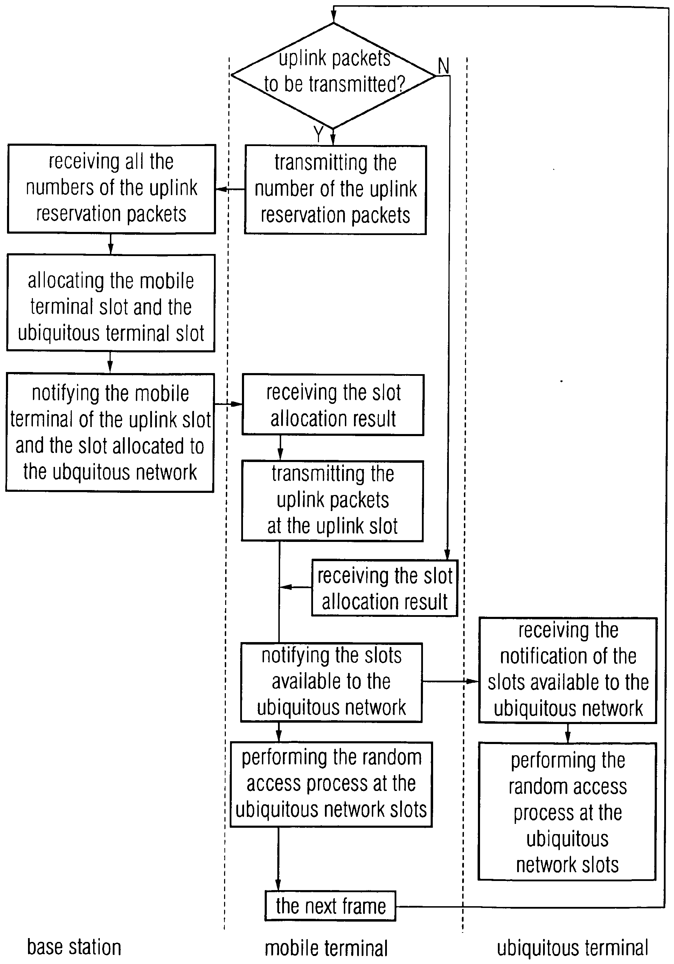

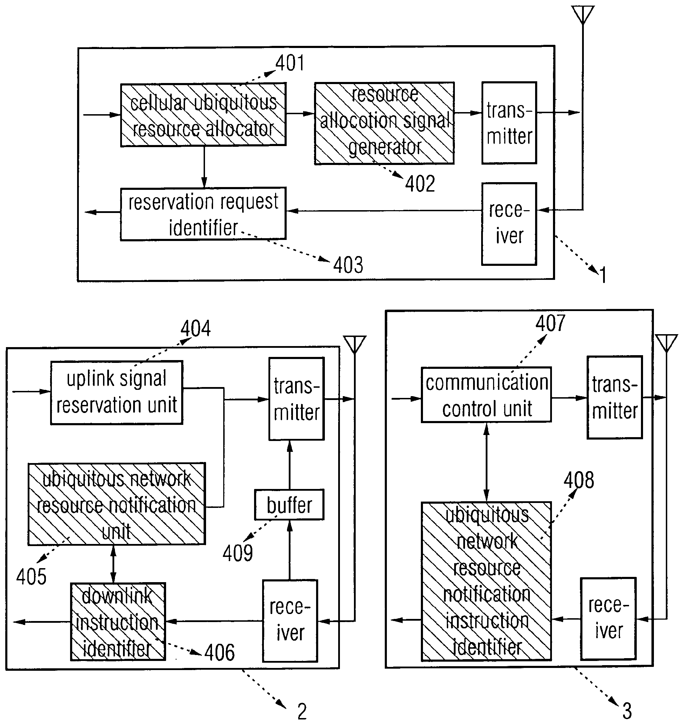

The basic concept diagram is shown in Figure 2, wherein the uplink and downlink adopt the TDD mode and the base station and the terminal adopt the TDM mode. Figure 3 shows the specific flow as follows (the architecture diagram for the base station, mobile terminal 2 and ubiquitous terminal 3 is shown in Figure 4):
1) the mobile terminal determines whether there are packets to be transmitted.
2) if yes, the procedure proceeds to step 3); if no, the mobile terminal receives a slot allocation result transmitted from the base station and proceeds to step 7), wherein all the mobile terminals can receive the slot allocation result.
3) the uplink signal reservation unit 404 generates a reservation request and transmits the reservation request signal containing the number of the uplink reservation packets to the base station through the transmitter.
4) after receiving the reservation requests from all the mobile terminals, the reservation request identifier 403 of the base station transmits the request information to the cellular ubiquitous resource allocator 401.
5) the cellular ubiquitous network allocator 401 allocates the uplink slot resource for each mobile terminal, counts the slots available to the ubiquitous network, generates the uplink slot resource allocation information for the mobile terminal and the ubiquitous terminal (since the number of the uplink packets to be transmitted by each mobile terminal is different, the slots allocated to the ubiquitous network by the base station are also different), and transmits the resource allocation information to the resource allocation signal generator 402. The resource allocation signal generator 402 generates the resource allocation signal which is then transmitted by the transmitter in the downlink channel 203, and notifies each mobile terminal of the uplink slot 201 and the slot 202 available to the ubiquitous network (referring to Figure 2).
6) after receiving the above-mentioned notification, the mobile terminal identifies the information in the notification through the downlink instruction identifier 406, and transmits the resource information allocated to the ubiquitous network to the ubiquitous network resource notification unit 405. Till then the mobile terminal which has packets to transmit can transmit the uplink packets.
7) through the transmitter, the ubiquitous network resource notification unit 405 transmits the notification of the start and end slots for the ubiquitous network resource to the around ubiquitous terminals when the ubiquitous network slot begins.
8) after identifying said notification, by the communication control unit 407 the ubiquitous resource notification instruction identifier 408 controls the ubiquitous terminal to perform the random access. During the random access process, the mobile terminal may transmit the received packets from the base station to the ubiquitous terminal, and may also receive the packets information transmitted from the ubiquitous terminal to itself or to the base station, store the packets which is transferred to the base station by itself in the buffer409, and at the next uplink slot for the mobile terminal transfer the packets stored in the buffer409 to the base station.
9) the procedure proceeds to step 1) at the uplink slot of the next frame.

Here the mode of the ubiquitous terminal is different from that of the mobile terminal, and the ubiquitous terminal cannot identify the signal transmitted from the base station. The mobile terminal receives the packets which are transmitted from the base station to the ubiquitous terminal, stores said packets in the buffer409 and then transfers said packets to the ubiquitous terminal at the ubiquitous network communication slot. Similarly, the packets that are transmitted from the ubiquitous terminal to the base station are transferred through the mobile terminal and the mobile terminal doesn't communicate with the base station during the communication between the mobile terminal and the ubiquitous terminal. Said ubiquitous terminal may be a wireless LAN terminal, UWB terminal, bluetooth terminal or the similar low power wireless terminal, which can communicate with the mobile terminal.

The mobile terminal includes: an uplink signal reservation unit 404, which is connected with the transmitter and is used to generate a reservation request including the number of the uplink reservation packets and transmit the reservation request to the base station through the transmitter; a ubiquitous network resource notification unit 405, which is connected with said transmitter and is used to transmit the ubiquitous network resource notification information at the ubiquitous network slot notified by the base station and notify the slots for the communication between the transmitter/receiver and the ubiquitous terminal; a downlink instruction identifier 406, which is connected with the receiver and is used to identify the downlink instruction from the base station and to transmit the resource allocation information about the ubiquitous terminal to the ubiquitous network resource notification unit 405; a buffer409, which is connected with said transmitter and said receiver and is used to store the packets which are received from the ubiquitous network by the receiver and which are to be transmitted to the base station in the uplink slot through the transmitter and also is used to store the packets which are transmitted from the base station to the ubiquitous terminal and received by the receiver and which are to be transmitted to the ubiquitous terminal in the ubiquitous network slot through the transmitter.

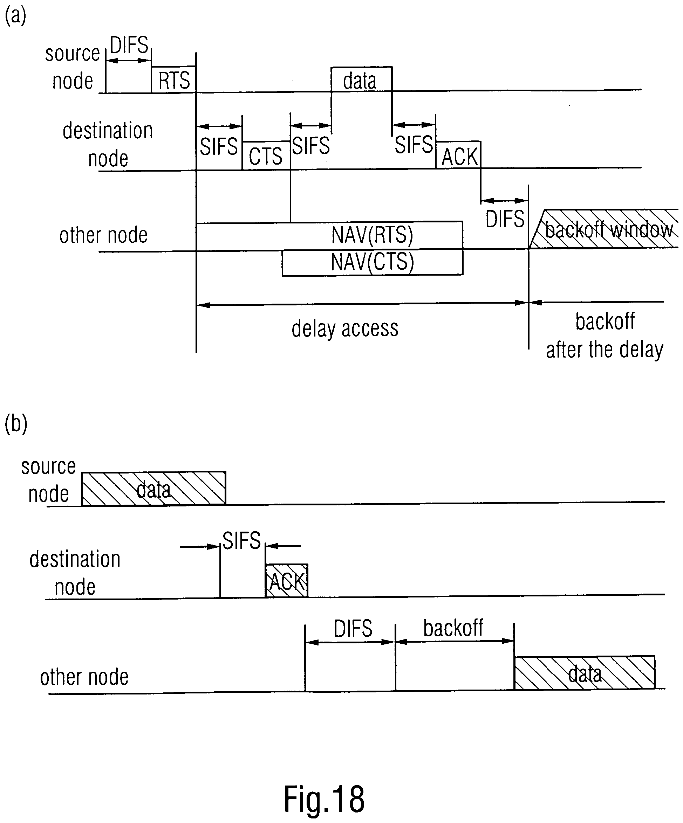

The ubiquitous terminal includes: a ubiquitous network resource notification instruction identifier 408, which is connected with the transmitter and the communication control unit 407 and is used to identify the instruction of the ubiquitous network resource start and end slots in which the instruction is transmitted by the ubiquitous network resource notification unit 405 of the mobile terminal to the around ubiquitous terminals at the beginning of the ubiquitous network slot, and to transmit said instruction to the communication control unit 407; a communication control unit 407, which is used to control the ubiquitous terminal to communicate with the mobile terminal according to the notification instruction, such as the transmitting and receiving of the random access shown in Figure 18.

The base station also includes: a reservation request identifier 403, which is connected with the transmitter and the cellular ubiquitous network resource allocator 401 and is used to receive the uplink reservation packet signal and to transmit the information in said signal to the cellular ubiquitous resource allocator 401; a cellular ubiquitous resource allocator 401 which is used to generate the slot resource allocation information for the mobile terminal and the ubiquitous terminal according to the uplink reservation packet signals from all the mobile terminals, to count the resource available to the ubiquitous network and to transmit said information to the resource allocation signal generator 402; and a resource allocation signal generator 402 which is used to generate the resource allocation signal which is then transmitted to the mobile terminal by the transmitter.

The random access protocol includes the Carrier Sense Multiple Access with Collision Avoidance (CSMA/CA) protocol, in which each node decides independently when accessing the channel and if the access fails, the node re-accesses the channel after a backoff period. The distributed coordination function (DCF) in the wireless LAN also adopts the CSMA/CA protocol and it defines the handshake process based on RTS/CTS/DATA/ACK. Specifically, as Figure 18(a) shows when there are packets to be transmitted to a node, the node will monitor the channel, and if the channel is idle and the idle time is longer than or equal to the DCF InterFrame Space (DIFS), said node will immediately send a short RTS(Request to Send); otherwise, if the channel is busy or the idle period is shorter than the DIFS, the node will perform the backoff when the channel is idle and the idle period is equal to the DIFS, and then the node will send a RTS after the backoff process. The backoff process is realized by the backoff window, which represents the backoff time. After correctly receiving the RTS and waiting for a short SIFS, the receive node returns a short CTS (Clear to send), which includes the receive node address RA copied from the transmit node address TA in the RTS and the duration for the transmission of the later packets. The duration here is equal to the duration in the received RTS from which the time for sending CTS packet and one SIFS are subtracted. After receiving the CTS packet, the transmit node will wait a SIFS and then transmit data packets. After receiving said packets, the receive node will wait a SIFS and then send an ACK to confirm.

Figure 18(b) shows another example of random access, i.e., it is not necessary to send RTS and CTS and the terminal that has packets to transmit will monitor the channel first, if it finds no terminal is transmitting data, it will wait a DIFS and then transmits the packets, if it finds other terminal is transmitting the packets, it will wait until said other terminal finishes transmission and then waits a DIFS and starts to transmit the packets after the backoff process.

In addition, if the communication between the mobile terminals and the ubiquitous terminals is in the central control mode, the mode can be a polling or reservation mode.

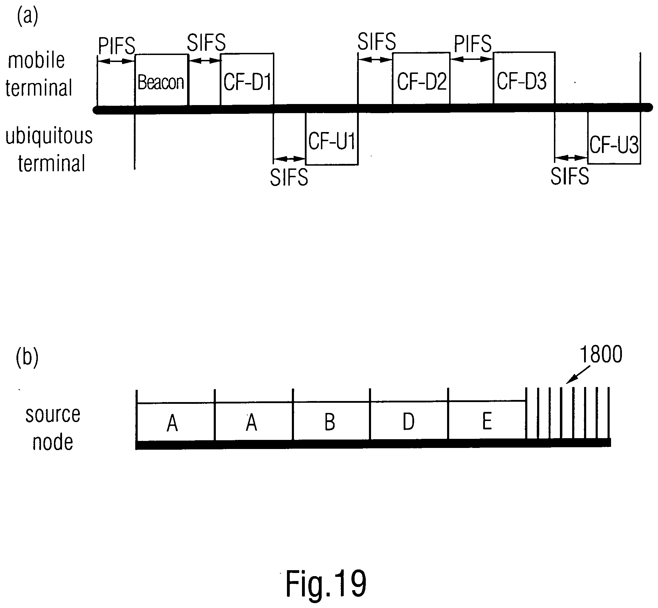

The polling mode is shown in Figure 19(a), in which the mobile terminal sends a beacon frame after every super-frame length. Before sending the beacon frame, the mobile terminal will first monitor the channel and wait a PIFS [PCF (Point Coordination Function) InterFrame Space] and then sends the beacon frame. The mobile terminal polls the ubiquitous terminals in the polling list and the polling process is shown in Figure 18(c). DF-Di is the poll frame sent from the mobile terminal which carries the downlink data frame transmitted to the ubiquitous terminal i and CF-Ui is the uplink data frame from the polled ubiquitous terminal i. After polling, there will be two results: (1) the terminals in the polling list are all polled; (2) there is no enough time for the next terminal to be polled to transmit a minimum protocol unit.

The reservation mode is shown in Figure 19(b). Every node has to book before transmitting data. The slots before every multiframe are used to transmit data and the last slot is divided into subslots 1800 that are specifically for reservation. The reservation request is performed in the slot ALOHA mode.

### Embodiment 1b

[TDD/TD] the cellular network uses the time division duplex (TDD) mode. The ubiquitous network and the cellular network are combined in the time divided multiplex (TD) mode, and they adopt different access modes, such as the TDM mode.

The basic concept diagram is shown in Figure 2, wherein the uplink and downlink adopt the TDD mode and the base station and the terminal adopt the TDM mode.

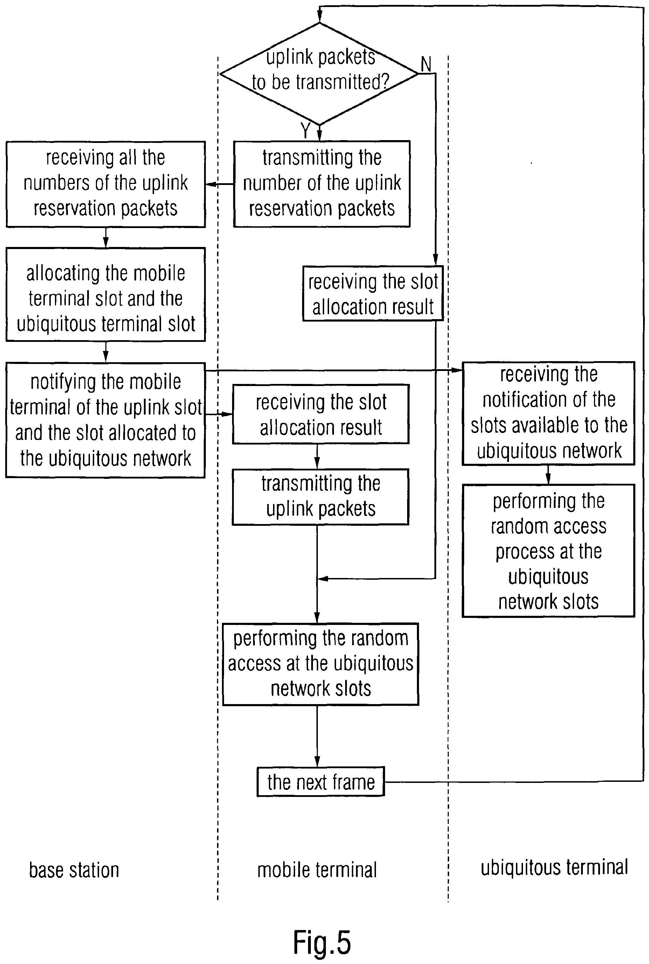

The flow is shown in Figure 5 and the specific flow is as follows (the architectures of the base station, the mobile terminal and the ubiquitous terminal are shown in Figure 4):
1) the mobile terminal determines whether there are packets to be transmitted.
2) if yes, the procedure proceeds to step 3); if no, receives the slot allocation result transmitted from the base station and proceeds to step 7), wherein all the mobile terminal can receive the slot allocation result.
3) the uplink signal reservation unit 404 generates a reservation request and transmits the reservation request signal to the base station through the transmitter.
4) after receiving the reservation requests from all the mobile terminals, the reservation request identifier 403 of the base station transmits the request information to the cellular ubiquitous resource allocator 401.
5) the cellular ubiquitous network allocator 401 allocates the uplink slot resource for each mobile terminal, counts the slots available to the ubiquitous network, generates the uplink slot resource allocation information for the mobile terminal and the ubiquitous terminal (since the number of the uplink packets to be transmitted by each mobile terminal in each frame is different, the slots allocated to the ubiquitous network by the base station are different also), and transmits the resource allocation information to the resource allocation signal generator 402. The resource allocation signal generator 402 generates the resource allocation signal which is then transmitted by the transmitter in the downlink channel 3, and notifies each mobile terminal of the uplink slot 1 and the slot 2 available to the ubiquitous network (referring to Figure 2);
6) after receiving the above notification, the mobile terminal identifies the information in the resource allocation signal through the downlink instruction identifier 406 and the mobile terminal which has packets to transmit can transmit the uplink packets. After the ubiquitous terminal and the mobile terminal receive at the same time said slot available to the ubiquitous terminal, the ubiquitous resource notification instruction identifier 408 will identify first and then the communication control unit 407 will control the ubiquitous terminal to communicate with the mobile terminal in the available slot for the ubiquitous network.
7) the mobile terminal communicates with the ubiquitous terminal in the ubiquitous network slot, in which the mobile terminal may transmit the received packets from the base station to the ubiquitous terminal, and may also receive the packets transmitted from the ubiquitous terminal to itself or to the base station. And the mobile terminal stores the packets to be transferred to the base station in the buffer409 and at the next uplink slot for the mobile terminal transfers the stored packets to the base station.
8) the procedure proceeds to step 1) at the uplink slot of the next frame.

In this embodiment, the access mode of the ubiquitous network is different from that of the cellular network. The ubiquitous terminal can identify the signal from the base station and can directly receive the packets from the base station. However, the packets transmitted from the ubiquitous terminal to the base station have to be transferred by the mobile terminal, so during the communication between the mobile terminal and the ubiquitous terminal the mobile terminal doesn't communicate with the base station. Said ubiquitous terminal may be a wireless LAN terminal, or the similar low power wireless terminals, which can communicate with the mobile terminal.

The mobile terminal includes: an uplink signal reservation unit 404, which is connected with the transmitter and is used to generate a reservation request including the number of the uplink reservation packets and transmit the reservation request to the base station through the transmitter; a ubiquitous network resource notification unit 405, which is connected with said transmitter and is used to transmit the ubiquitous network resource notification information at the ubiquitous network slot notified by the base station and notify the slots for the communication between the transmitter/receiver and the ubiquitous terminal; a downlink instruction identifier 406, which is connected with the receiver and is used to identify the downlink instruction from the base station and to transmit the resource allocation information about the ubiquitous terminal to the ubiquitous network resource notification unit 405; a buffer409, which is connected with said transmitter and said receiver and is used to store the packets which are received from the ubiquitous network by the receiver and which are to be transmitted to the base station in the uplink slot through the transmitter.

The ubiquitous terminal includes: a ubiquitous network resource notification instruction identifier 408, which is connected with the transmitter and is used to identify the ubiquitous network resource allocation information transmitted from the base station to the ubiquitous terminal; a communication control unit 407, which is connected with the ubiquitous network resource notification instruction identifier 408 and is used to control the ubiquitous terminal to communicate with the mobile terminal according to the notification instruction from the ubiquitous network resource notification instruction identifier 408. For example, the communication control unit 407 controls the transmitting and receiving of the random access as shown in Figure 18.

The base station also includes: a reservation request identifier 403, which is used to receive the uplink reservation packet signal; a cellular ubiquitous resource allocator 401 which is connected with the reservation request identifier 403, and is used to count the resource available to the ubiquitous network, and to generate and transmit the slot resource allocation information for the mobile terminal and the ubiquitous terminal according to the uplink reservation packet signals from all the mobile terminals; and a resource allocation signal generator 402 which is used to generate the resource allocation signal which is then transmitted to the mobile terminal by the transmitter according to the slot resource allocation information for the mobile terminal from the cellular ubiquitous resource allocator 401.

### Embodiment 2a

[TDD/TD] the cellular network adopts the TDD mode. The ubiquitous network and the cellular network are combined in the FDM mode. The ubiquitous network and the cellular network use different access modes.

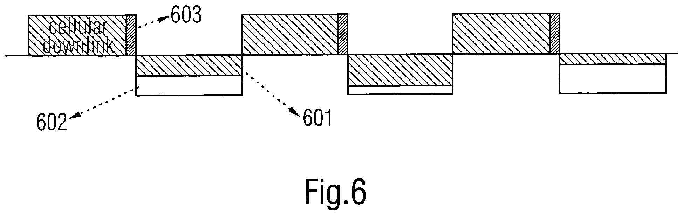

The basic concept is shown in Figure 6, wherein both the uplink and the downlink use the TDD mode, and the base station communicates with the terminal in the FDM mode.

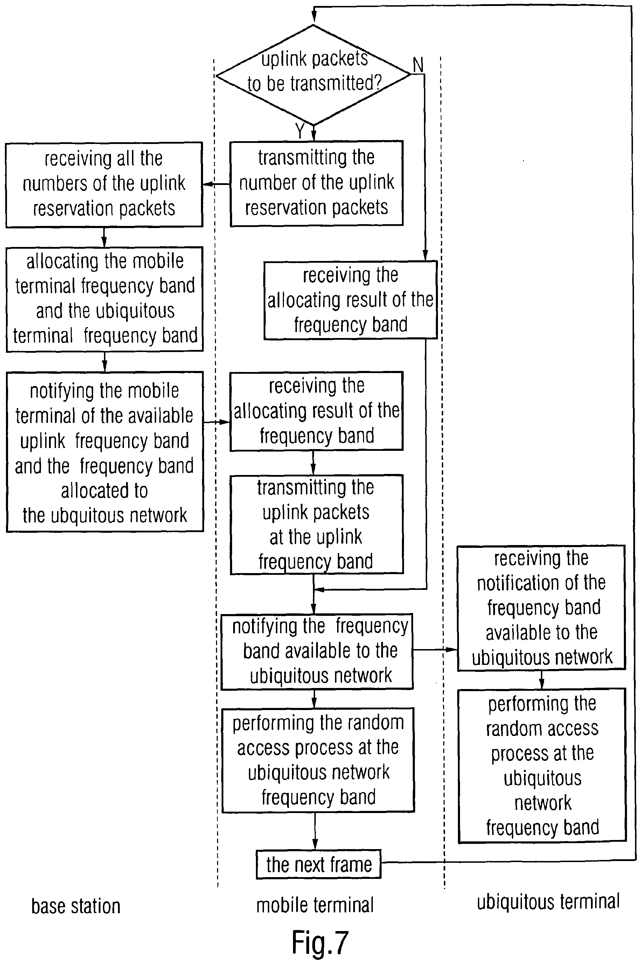

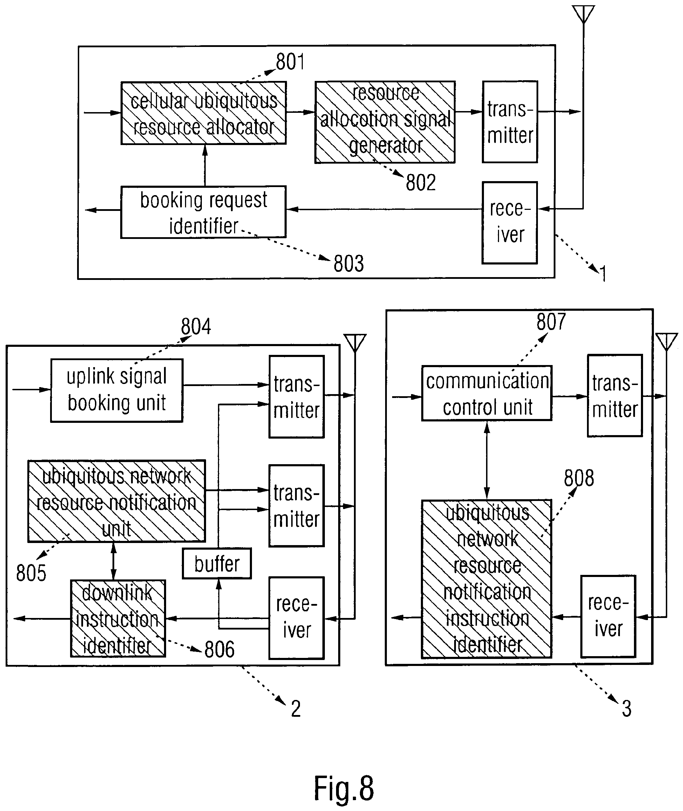

The flow is shown in Figure 7 and the specific flow is as follows (the architectures of the base station, the mobile terminal and the ubiquitous terminal are shown in Figure 8):
1) the mobile terminal determines whether there are packets to be transmitted.
2) if yes, the procedure proceeds to step 3); if no, receives the frequency band allocation result transmitted from the base station and proceeds to step 7), wherein all the mobile terminal can receive the frequency band allocation result.
3) the uplink signal reservation unit 804 generates a reservation request and transmits the reservation request signal to the base station through the transmitter.
4) after receiving the reservation requests from all the mobile terminals, the reservation request identifier 803 of the base station transmits the request information to the cellular ubiquitous resource allocator 801.
5) the cellular ubiquitous network allocator 801 allocates the uplink frequency band resource for each mobile terminal, counts the frequency bands available to the ubiquitous network, generates the uplink frequency band resource allocation information for the mobile terminal and the ubiquitous terminal (since the number of the uplink packets to be transmitted by each mobile terminal in each frame is different, the bandwidth allocated to the ubiquitous network by the base station is different also), and transmits the resource allocation information to the resource allocation signal generator 802. The resource allocation signal generator 802 generates the resource allocation signal which is transmitted by the transmitter in the downlink channel 603, and notifies each mobile terminal of the uplink frequency band 601 and the frequency band 602 available to the ubiquitous network (referring to Figure 6).
6) after receiving the above notification, the mobile terminal identifies the information in the notification through the downlink instruction identifier 806 and transmits the resource information allocated to the ubiquitous network to the ubiquitous network resource notification unit 805. And then the mobile terminal that has packets to transmit can transmit the uplink packets.
7) through the transmitter, the ubiquitous network resource notification unit 805 transmits the ubiquitous network allocation information to the around ubiquitous terminals at the ubiquitous network frequency band and notifies them to communicate with the ubiquitous network.
8) after identifying said ubiquitous network resource allocation information, the ubiquitous resource notification instruction identifier 808 controls the ubiquitous terminal to communicate with the mobile terminal through the communication control unit 807. During the communication, the mobile terminal may buffer the packet information received by the base station, which is to be sent to the ubiquitous terminal, and then transmit the buffered packets to the ubiquitous terminal. And the mobile terminal may also receive the packets transmitted from the ubiquitous terminal to itself or to the base station, store the packets to be transferred to the base station in the buffer409, and at the next uplink frequency band for the mobile terminal transfer the stored packets to the base station.
9) the procedure proceeds to step 1) at the uplink frequency band of the next frame.

Here the mode of the ubiquitous terminal is different from that of the mobile terminal and the ubiquitous terminal cannot identify the signal transmitted from the base station.

The mobile terminal includes: an uplink signal reservation unit 804, which is connected with the cellular transmitter and is used to transmit the number of the uplink reservation packets and the packet data needed to be transmitted; a ubiquitous network resource notification unit 805, which is connected with the ubiquitous transmitter and is used to transmit the ubiquitous network resource notification instruction at the ubiquitous network frequency band notified by the base station and to notify the frequency band for the communication between the ubiquitous transmitter/receiver and the ubiquitous terminal; a downlink instruction identifier 806, which is connected with the receiver and is used to identify the downlink instruction from the base station and to transmit the resource allocation information about the ubiquitous terminal to the ubiquitous network resource notification unit 805; a buffer809, which is connected with said cellular transmitter, said ubiquitous transmitter and said receiver and is used to store the packets received by the receiver, which are sent from the ubiquitous terminal and then transmit said packets to the base station at the uplink frequency band of the mobile terminal through the first frequency band transmitter, or is used to store the packets which are transmitted from the base station to the ubiquitous terminal and then transmit said packets to the ubiquitous terminal at the ubiquitous network frequency band through the ubiquitous transmitter.

The ubiquitous terminal includes: a ubiquitous network resource notification instruction identifier 808, which is used to identify the ubiquitous network resource notification instruction from the ubiquitous network resource notification unit 805 of the mobile terminal; a communication control unit 807, which is connected with the ubiquitous network resource notification instruction identifier 808 and is used to control said ubiquitous terminal to communicate with the mobile terminal according to the specified frequency band in the notification instruction from the ubiquitous network resource notification instruction identifier 808.

The base station includes: a reservation request identifier 803, which is connected with the transmitter and is used to receive the uplink reservation signal; a cellular ubiquitous resource allocator 801, which is connected with the reservation request identifier 803, receives the information in the uplink reservation signal from the reservation request identifier 803, and is used to generate the frequency band resource allocation information for the mobile terminal and the ubiquitous terminal according to the uplink reservation packet signals from all the mobile terminals and count the ubiquitous network available resource and to transmit said information to the resource allocation signal generator 802; a resource allocation signal generator 802, which is used to generate the resource allocation signal and to transmit said signal to the mobile terminal through the transmitter.

### Embodiment 2b

[TDD/TD] the cellular network adopts the TDD mode. The ubiquitous network and the cellular network are combined in the FDM mode. The ubiquitous network and the cellular network use the same access mode.

The basic concept is shown in Figure 6, wherein both the uplink and the downlink use the TDD mode, and the base station communicates with the terminal in the FDM mode.

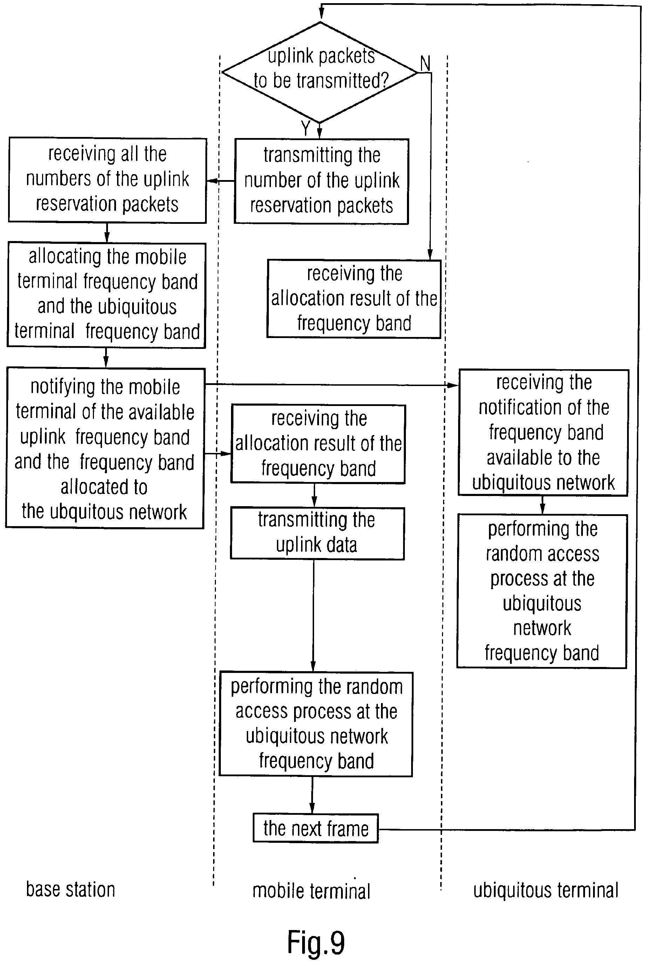

The flow is shown in Figure 9 and the specific flow is as follows (the architectures of the base station, the mobile terminal and the ubiquitous terminal are shown in Figure 8):
1) the mobile terminal determines whether there are packets to be transmitted.
2) if yes, the procedure proceeds to step 3); if no, receives the frequency band allocation result transmitted from the base station and proceeds to step 7), wherein all the mobile terminal can receive the frequency band allocation result.
3) the uplink signal reservation unit 804 generates a reservation request and transmits the reservation request signal to the base station through the transmitter.
4) after receiving the reservation requests from all the mobile terminals, the reservation request identifier 803 of the base station transmits the request information to the cellular ubiquitous resource allocator 801.
5) the cellular ubiquitous network allocator 801 allocates the uplink frequency band resource for each mobile terminal, counts the frequency bands available to the ubiquitous network, generates the uplink frequency band resource allocation information for the mobile terminal and the ubiquitous terminal (since the number of the uplink packets to be transmitted by each mobile terminal in each frame is different, the bandwidth allocated to the ubiquitous network by the base station is different also), and then transmits the resource allocation information to the resource allocation signal generator 802; the resource allocation signal generator 802 generates the resource allocation signal which is then broadcasted in the downlink channel 603, and notifies each mobile terminal of the uplink frequency band 601 and the frequency band 602 available to the ubiquitous network (referring to Figure 6).
6) after receiving the above notification, the mobile terminal identifies the information in notification through the downlink instruction identifier 806 and the mobile terminal that has packets to transmit can transmit the uplink packets. After the ubiquitous terminal receives the notification of the frequency band available to the ubiquitous network, the ubiquitous resource notification instruction identifier will identify first, and if there are packets to be transmitted the communication control unit 807 will control the ubiquitous terminal to communicate with the mobile terminal at the available frequency band.
7) the mobile terminal communicates with the ubiquitous terminal at the ubiquitous network sub-carrier frequency band. During the communication, the mobile terminal may store the packets transmitted from the base station to the ubiquitous terminal in the buffer809 and then transmit the buffered packets to the ubiquitous terminal at the ubiquitous network frequency band, and may also receive the packets from the ubiquitous terminal. If there are packets to be transferred to the base station, the mobile terminal will store said packets in the buffer809 and at the next uplink frequency band for the mobile terminal transfer the stored packets to the base station.
8) the procedure proceeds to step 1) at the uplink frequency band of the next frame.

Here the mode of the ubiquitous terminal is the same with that of the mobile terminal and can receive the resource allocation information from the base station.

The mobile terminal includes: an uplink signal reservation unit 804, which is connected with the cellular transmitter and is used to transmit the number of the uplink reservation packets and the packet data needed to be transmitted; a ubiquitous network resource notification unit 805, which is connected with the ubiquitous transmitter and is used to notify the frequency band for the communication between the ubiquitous transmitter/receiver and the ubiquitous terminal; a downlink instruction identifier 806, which is connected with the receiver and is used to identify the downlink instruction from the base station and to transmit the resource allocation information about the ubiquitous terminal to the ubiquitous network resource notification unit 805; a buffer809, which is connected with said cellular transmitter, said ubiquitous transmitter and said receiver and is used to store the packets received by the receiver, which are sent from the ubiquitous terminal, and then transmit said packets to the base station at the uplink frequency band of the mobile terminal through the cellular transmitter, or is used to store the packets which are transmitted from the base station to the ubiquitous terminal and then transmit said packets to the ubiquitous terminal at the ubiquitous network frequency band through the ubiquitous transmitter.

The ubiquitous terminal includes: a ubiquitous network resource notification instruction identifier 808, which is used to identify the ubiquitous network resource allocation notification instruction from the base station; a communication control unit 807, which is connected with ubiquitous network resource notification instruction identifier 808 and is used to control said ubiquitous terminal to communicate with the mobile terminal according to the specified frequency band in the notification instruction.

The base station includes: a reservation request identifier 803, which is connected with the transmitter and the cellular ubiquitous network resource allocator 801 and is used to receive the uplink reservation signal and to transmit the to the cellular ubiquitous resource allocator 801; a cellular ubiquitous resource allocator 801, which receives the information in said signal from the reservation request identifier 803 and is used to count the ubiquitous network available resource, and to generate and transmit the frequency band resource allocation information for the mobile terminal and the ubiquitous terminal according to the uplink reservation packet signals from all the mobile terminals; a resource allocation signal generator 802, which is used to generate the resource allocation signal and to transmit said signal to the mobile terminal through the transmitter.

### Embodiment 3

[TDD/TD] the cellular network adopts the TDD mode. The ubiquitous network and the cellular network are combined in the PDM (Packet Divided Multiplex) mode. During the uplink share period of the ubiquitous network and the cellular network, the mobile terminal can communicate with the base station (uplink) and can also communicate with the ubiquitous terminal. In the downlink channel, if the mobile terminal receives the packets transmitted from the base station to the ubiquitous terminal, it will store the packets in the buffer1209 and after it communicates with the ubiquitous terminal, the mobile terminal will transmit said packets to the ubiquitous terminal.

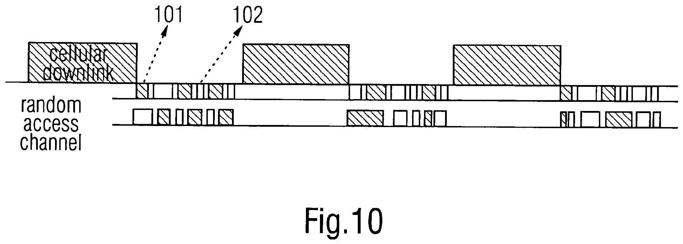

The basic concept is shown in Figure 10, wherein reference sign 101 represents the cellular uplink channel and reference sign 102 represents the ubiquitous network random access channel. The cellular network uplink and the ubiquitous network share one or more random access channels.

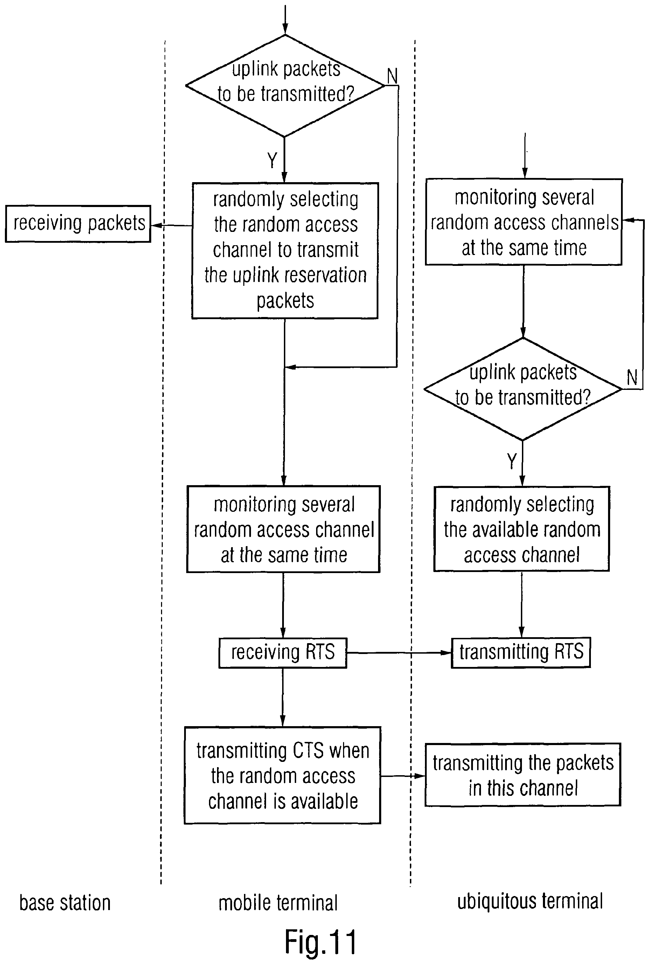

The flow is shown in Figure 11.
1) the mobile terminal determines whether there are packets to be transmitted to the base station.
2) if yes, the procedure proceeds to step 3); if no, the procedure proceeds to step 4).
3) the mobile terminal randomly selects an access channel to directly transmit the uplink packets to the base station in the uplink period.
4) the mobile terminals that have no uplink packets or have already transmitted the uplink packets monitor the multiple random access channels at the same time.
5) the ubiquitous terminals monitor the multiple random access channels simultaneously.
6) the ubiquitous terminal determines whether there are packets to be transmitted;
7) if yes, the ubiquitous terminal selects an available access channel and sends a RTS signal to the mobile terminal and then proceeds to step 8); otherwise, the procedure returns to step 5).
8) after identifying the RTS from the ubiquitous terminal, the RTS signal identification unit of the mobile terminal determines whether the selected random access channel by the ubiquitous terminal is available.
9) if yes, the mobile terminal sends a CTS to the ubiquitous terminal (if this channel is used for other purpose simultaneously, such as the uplink packet transmission from said terminal, the transmission of the CTS can be delayed).
10) after identifying the CTS, the CTS signal identification unit 1207 of the ubiquitous terminal feeds back the information to the communication control unit 1208, and the communication control unit 1208 controls the ubiquitous terminal to transmit the packets to the mobile terminal.

During the communication between the mobile terminal and the ubiquitous terminal, the mobile terminal receives the packets transmitted from the ubiquitous terminal to itself or to the base station and stores the packets to be transferred to the base station in the buffer1209. After the mobile terminal randomly accessed the base station, the packets stored in the buffer1209 are transmitted to the base station. Similarly, the mobile terminal first receives the packets transmitted from the base station to the ubiquitous terminal, stores the packets in the buffer1209 and after the mobile terminal communicates with the ubiquitous terminal, transmits the stored packets to the ubiquitous terminal.

The mobile terminal in the present embodiment includes: two RTS signal identification units 1203 and 1205, which are used to respectively identify the RTS signal from the ubiquitous terminal and from the base station and each of which is respectively connected with a receiver; a communication control unit 1204, which is connected with a transmitter and the two RTS signal identification units 1203 and 1205, and is used to control the communication between the mobile terminal and the ubiquitous terminal and between the mobile terminal and the base station; a random channel selecting unit 1202, which is connected with an uplink packet unit 1201 and every transmitter and is used to randomly select the channel to transmit the uplink packets; a buffer1209, which is connected with each transmitter and receiver and is used to store the packets which are transmitted from the base station to the ubiquitous terminal or are transmitted from the ubiquitous terminal to the base station.

The ubiquitous terminal includes: a CTS signal identification unit 1207, which is connected with the receiver and is used to identify the CTS signal from the mobile terminal and then to transmit the CTS signal; a communication control unit 1208, which is connected with the transmitter and the CTS signal identification unit 1207and is used to control the communication between said ubiquitous terminal and the mobile terminal. The base station here is a normal base station with the packet multiplexing function.

Similarly, the following access mode can be adopted:
1) the mobile terminal which has packets to be transmitted to the base station will monitor the channel first, if it finds there no terminal is transmitting data, it will wait a DIFS and then transmits the packets; if it finds a terminal is transmitting the packets, it will wait until that terminal finishes transmitting, then waits a DIFS and starts to transmit the packets after the backoff period;
2) the ubiquitous terminal which has packets to be transmitted to the base station will monitor the channel first, if it finds no terminal is transmitting data, it will wait a DIFS and then transmits the packets; if it finds a terminal is transmitting the packets, it will wait until that terminal finishes transmitting, then waits a DIFS and starts to transmit the packets after the backoff period;
3) the mobile terminal processes the packets from the ubiquitous terminal or from the base station and stores those packets to be transmitted to the base station or to the ubiquitous terminal in the buffer.

The mobile terminal here doesn't include a RTS signal identification unit and it is not necessary for the ubiquitous terminal to include a CTS signal identification unit but they both include a device to monitor the channel. The terminal which has packets to be transmitted will monitor the channel first, if it finds no terminal is transmitting data, it will wait a DIFS and then transmits the packets; if it finds a terminal is transmitting the packets, it will wait until that terminal finishes transmitting, then waits a DIFS and starts to transmit the packets after the backoff period.

### Embodiment 4a

[TDD/TD] the cellular network adopts the TDD mode. The ubiquitous network and the cellular network are combined in the FDM mode. The ubiquitous network and the cellular network use different access modes.

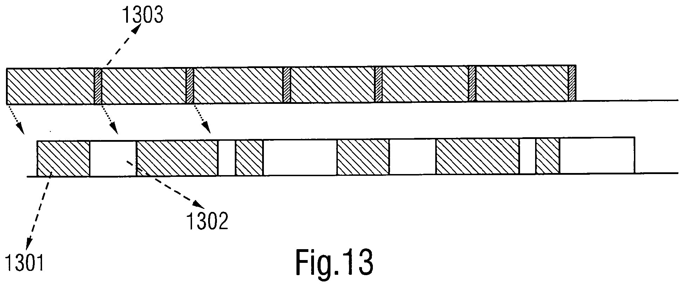

The basic concept is shown in Figure 13.

The flow is shown in Figure 3.
1) the mobile terminal determines whether there are packets to be transmitted.
2) if yes, the procedure proceeds to step 3); if no, the mobile terminal receives the slot allocation result transmitted from the base station and proceeds to step 7), wherein all the mobile terminal can receive the slot allocation result.
3) the uplink signal reservation unit 1404 generates a reservation request and transmits the reservation request signal to the base station through the transmitter, wherein the reservation request includes the number of the uplink reservation packets.
4) after receiving the reservation requests from all the mobile terminals, the reservation request identifier 1403 of the base station transmits the request information to the cellular ubiquitous resource allocator 1401.
5) the cellular ubiquitous network allocator 1401 allocates the uplink slot resource for each mobile terminal, counts the slots available to the ubiquitous network, generates the uplink slot resource allocation information for the mobile terminal and the ubiquitous terminal (since the number of the uplink packets to be transmitted by each mobile terminal in each frame is different, the slots allocated to the ubiquitous network by the base station are different also), and transmits the resource allocation information to the resource allocation signal generator 1402. The resource allocation signal generator 1402 generates the resource allocation signal, which is then transmitted by the transmitter in the downlink channel 1303, and notifies each mobile terminal of the uplink slot 1301 and the slot 1302 available to the ubiquitous network (referring to Figure 13).
6) after receiving the above notification, the mobile terminal identifies the information in the notification through the downlink instruction identifier 1406 and transmits the resource information allocated to the ubiquitous network to the ubiquitous network resource notification unit 1405. And then the mobile terminal which has packets to transmit can transmit the uplink packets.
7) through the transmitter, the ubiquitous network resource notification unit 1405 transmits the start and end slot notification for the ubiquitous network resource to the around ubiquitous terminals when the ubiquitous network slot begins; then the mobile terminal performs the random access processing at the ubiquitous network slot.
8) after receiving said notification, by the communication control unit 407, the ubiquitous resource notification instruction identifier 1408 controls the ubiquitous terminal to perform the random access. During the communication, the mobile terminal may transmit the packets to the ubiquitous terminal, which are buffered in the buffer1409 and received from the base station, and may also receive the packets transmitted from the ubiquitous terminal to itself or to the base station, store the packets to be transferred to the base station in the buffer1409, and at the next uplink slot for the mobile terminal transfer the stored packets to the base station.
9) the procedure proceeds to step 1) at the uplink slot of the next frame.

Here the mode of the ubiquitous terminal is different from that of the mobile terminal and cannot identify the signal transmitted from the base station.

The mobile terminal includes: an uplink signal reservation unit 1404, which is connected with the transmitter and is used to transmit the number of the uplink reservation packets; a ubiquitous network resource notification unit 1405, which is connected with said transmitter and is used to transmit the ubiquitous network resource notification information and the slot for the communication between the transmitter/receiver and the ubiquitous terminal at the ubiquitous network slot notified by the base station; a downlink instruction identifier 1406, which is connected with the cellular receiver and is used to identify the downlink instruction from the base station and to transmit the resource allocation information about the ubiquitous terminal to the ubiquitous network resource notification unit 1405; a buffer1409, which is connected with said transmitter and the ubiquitous receiver and is used to store the packets which are received from the ubiquitous network by the ubiquitous receiver and which are to be transmitted to the base station in the uplink slot through the transmitter, and also is used to store the packets which are transmitted from the base station to the ubiquitous terminal and received by the cellular receiver and which are to be transmitted to the ubiquitous terminal in the ubiquitous network slot through the transmitter.

The ubiquitous terminal includes: a ubiquitous network resource notification instruction identifier 1408, which is connected with the transmitter and is used to identify and transmit the instruction of the ubiquitous network resource start and end slots, which is transmitted by the ubiquitous network resource notification unit 1405 of the mobile terminal to the around ubiquitous terminals at the beginning of the ubiquitous network slot; a communication control unit 1407, which is connected with the ubiquitous network resource notification instruction identifier 1408 and is used to control the ubiquitous terminal to communicate with the mobile terminal according to the notification instruction as shown in Figure 18 (a) and 18 (b) in which the communication control unit 1407 controls the transmitting and receiving of the communication.

The base station includes: a reservation request identifier 1403, which is connected with the transmitter and is used to receive the uplink reservation packet signal and to transmit the information in said signal to the cellular ubiquitous resource allocator 1401; a cellular ubiquitous resource allocator 1401 which is connected with the reservation request identifier 1403 and is used to count the ubiquitous network available resource, and to generate and transmit the slot resource allocation information for the mobile terminal and the ubiquitous terminal according to the uplink reservation packet signals from all the mobile terminals, and to; a resource allocation signal generator 1402, which is used to generate the resource allocation signal and to transmit said signal to the mobile terminal through the transmitter.

### Embodiment 4b

[FDD/TD] the cellular network adopts the FDD mode. The ubiquitous network and the cellular network are combined in the TD mode. The ubiquitous network and the cellular network use the same access mode.

The basic concept is shown in Figure 13.

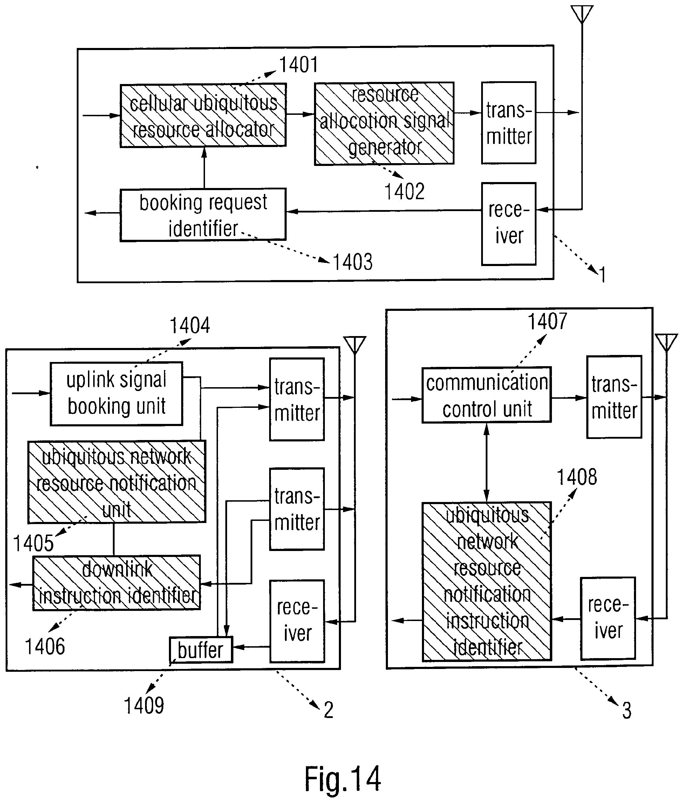

The flow is shown in Figure 5 and the specific flow is as follows (the architectures of the base station, the mobile terminal and the ubiquitous terminal are shown in Figure 14):
1) the mobile terminal determines whether there are packets to be transmitted.
2) if yes, the procedure proceeds to step 3); if no, the mobile terminal receives the slot allocation result transmitted from the base station and proceeds to step 7), wherein all the mobile terminal can receive the slot allocation result.
3) the uplink signal reservation unit 1404 generates a reservation request and transmits the reservation request signal to the base station through the transmitter.
4) after receiving the reservation requests from all the mobile terminals, the reservation request identifier 1403 of the base station transmits the request information to the cellular ubiquitous resource allocator 1401.
5) the cellular ubiquitous network allocator 1401 allocates the uplink slot resource for each mobile terminal, counts the slots available to the ubiquitous network, generates the uplink slot resource allocation information for the mobile terminal and the ubiquitous terminal (since the number of the uplink packets to be transmitted by each mobile terminal in each frame is different, the slots allocated to the ubiquitous network by the base station are different also), and transmits the resource allocation information to the resource allocation signal generator 1402. The resource allocation signal generator 1402 generates the resource allocation signal, which is then transmitted by the transmitter in the downlink channel 1303, and notifies each mobile terminal of the uplink slot 1301 and the slot 1302 available to the ubiquitous network (referring to Figure 13).
6) after receiving the above notification, the mobile terminal identifies the information in the resource allocation signal through the downlink instruction identifier 1406. And the mobile terminal which has packets to be transmitted can transmit the uplink packets. After the ubiquitous terminal and the mobile terminal receive said slot available to the ubiquitous terminal simultaneously, the ubiquitous resource notification instruction identifier 1408 will identify first and then the communication control unit 1407 will control the ubiquitous terminal to communicate with the mobile terminal in the ubiquitous network available slot.
7) the mobile terminal communicates with the ubiquitous terminal in the ubiquitous network available slot. During the communication, the mobile terminal may transmit the received packets from the base station to the ubiquitous terminal, and may also receive the packets transmitted from the ubiquitous terminal to itself or to the base station, store the packets to be transferred to the base station in the buffer1409 and at the next uplink slot for the mobile terminal transfer the stored packets to the base station.
8) the procedure proceeds to step 1) at the uplink slot of the next frame.

The mode of the ubiquitous terminal is the same with that of the mobile terminal and the ubiquitous terminal can identify the signal from the base station.

The mobile terminal includes: an uplink signal reservation unit 1404, which is connected with the transmitter and is used to transmit the number of the uplink reservation packets; a ubiquitous network resource notification unit 1405, which is connected with said transmitter and is used to notify the transmitter, the receiver and the ubiquitous terminal of the slot for the communication; a downlink instruction identifier 1406, which is connected with the cellular receiver and is used to identify the downlink instruction from the base station and to transmit the resource allocation information about the ubiquitous terminal to the ubiquitous network resource notification unit 1405; a buffer1409, which is connected with said transmitter and the ubiquitous receiver and is used to store the packets which are received from the ubiquitous network by the ubiquitous receiver and which are to be transmitted to the base station in the uplink slot through the transmitter, and also is used to store the packets which are transmitted from the base station to the ubiquitous terminal and received by the cellular receiver and which are to be transmitted to the ubiquitous terminal in the ubiquitous network slot through the transmitter.

The ubiquitous terminal includes: a ubiquitous network resource notification instruction identifier 1408, which is connected with the transmitter and is used to identify the instruction of the ubiquitous network resource allocation information from the base station, and to transmit said instruction to the communication control unit 1407; a communication control unit 1407, which is connected with the ubiquitous network resource notification instruction identifier 1408 and is used to control the ubiquitous terminal to communicate with the mobile terminal according to the notification instruction. Figure 18 (a) and 18 (b) shows that the communication control unit 1407 controls the transmitting and receiving of the communication.

The base station includes: a reservation request identifier 1403, which is connected with the transmitter and is used to receive and transmit the uplink reservation packet signal; a cellular ubiquitous resource allocator 1401 which is used to count the ubiquitous network available resource, and generate and transmit the slot resource allocation information for the mobile terminal and the ubiquitous terminal according to the uplink reservation packet signals from all the mobile terminals; a resource allocation signal generator 1402 which is used to generate the resource allocation signal and transmit said signal to the mobile terminal through the transmitter.

### Embodiment 5a

[TDD/TD] the cellular network adopts the FDD mode. The ubiquitous network and the cellular network are combined in the FD mode. The ubiquitous network and the cellular network use different access modes.

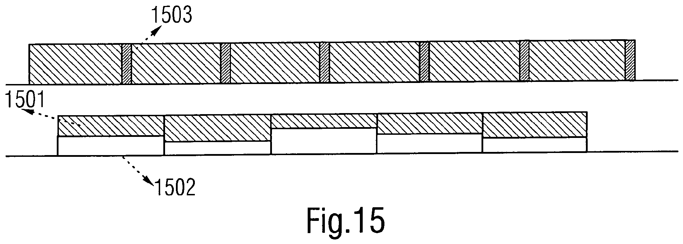

The basic concept is shown in Figure 15.

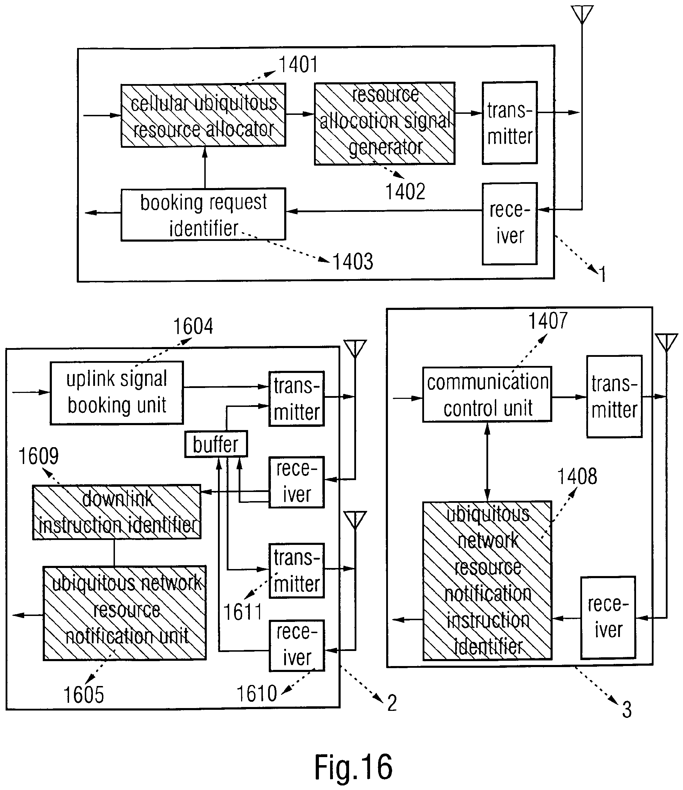

The flow is shown in Figure 7 and the specific flow is as follows (the architectures of the base station, the mobile terminal and the ubiquitous terminal are shown in Figure 16):
1) the mobile terminal determines whether there are packets to be transmitted.
2) if yes, the procedure proceeds to step 3); if no, the mobile terminal receives the slot allocation result transmitted from the base station and proceeds to step 7), wherein all the mobile terminal can receive the frequency band allocation result;
3) the uplink signal reservation unit 1604 generates a reservation request and transmits the reservation request signal to the base station through the transmitter.
4) after receiving the reservation requests from all the mobile terminals, the reservation request identifier 1603 of the base station transmits the request information to the cellular ubiquitous resource allocator 1601.
5) the cellular ubiquitous network allocator 1601 allocates the uplink frequency band resource for each mobile terminal, counts the frequency bands available to the ubiquitous network, generates the uplink frequency band resource allocation information for the mobile terminal and the ubiquitous terminal (since the number of the uplink packets to be transmitted by each mobile terminal in each frame is different, the bandwidth allocated to the ubiquitous network by the base station is different also), and transmits the resource allocation information to the resource allocation signal generator 1602. The resource allocation signal generator 1602 generates the resource allocation signal, which is transmitted by the transmitter in the downlink channel 1503, and notifies each mobile terminal of the uplink frequency band 1501 and the frequency band 1502 available to the ubiquitous network (refer to Figure 15).
6) after receiving the above notification, the mobile terminal identifies the information in the notification through the downlink instruction identifier 1606 and transmits the resource information allocated to the ubiquitous network to the ubiquitous network resource notification unit 1605. And then the mobile terminal which has packets to be transmitted can transmit the uplink packets.
7) through the transmitter, the ubiquitous network resource notification unit 1605 transmits the range of the frequency band used by the ubiquitous network to the around ubiquitous terminals at the ubiquitous network frequency band and notifies them to communicate with the ubiquitous network.
8) after receiving said instruction of the range of the frequency band used by the ubiquitous network, the ubiquitous resource notification instruction identifier 1608 controls the ubiquitous terminal to communicate with the mobile terminal through the communication control unit 1607. During the communication, the mobile terminal may transmit the buffered packets received from the base station to the ubiquitous terminal, and may also receive the packets transmitted from the ubiquitous terminal to itself or to the base station, store the packets to be transferred to the base station in the buffer1609, and at the next uplink frequency band for the mobile terminal transfer the stored packets to the base station.
9) the procedure proceeds to step 1) at the uplink frequency band of the next frame.

Here the mode of the ubiquitous terminal is different from that of the mobile terminal and the ubiquitous terminal cannot identify the signal transmitted from the base station.

The mobile terminal includes: an uplink signal reservation unit 1604, which is connected with the cellular transmitter and is used to transmit the number of the uplink reservation packets; a downlink instruction identifier 1606, which is connected with the cellular receiver and is used to identify the downlink instruction from the base station; a ubiquitous network resource notification unit 1605, which is connected with the ubiquitous network transmitter 1611 and is used to receive the resource allocation information about the ubiquitous terminal, to transmit the ubiquitous network resource notification instruction at the ubiquitous network frequency band notified by the base station and to notify the ubiquitous network transmitter, the ubiquitous network receiver and the ubiquitous terminal of the slot for the communication; a ubiquitous network receiver 1610, which is used to receive the packets from the ubiquitous network and to store the packets in the buffer1609; a ubiquitous network transmitter 1611, which is used to transmit the information to the ubiquitous network; a buffer1609, which is connected with said cellular transmitter, said cellular receiver, said ubiquitous network receiver and transmitter and is used to store the packets received by the ubiquitous network receiver, which are sent from the ubiquitous network, and then transmit said packets to the base station at the uplink slot of the mobile terminal by the first frequency band transmitter, or is used to store the packets received by the cellular receiver, which are transmitted from the base station to the ubiquitous terminal, and then transmit said packets to the ubiquitous terminal at the ubiquitous network slot by the ubiquitous network transmitter.

The ubiquitous terminal includes: a ubiquitous network resource notification instruction identifier 1608, which is connected with the transmitter and the communication control unit 1607 and is used to identify and transmit the instruction of the range of the frequency band from the ubiquitous network resource notification unit 1605 of the mobile terminal; a communication control unit 1607, which is used to control said ubiquitous terminal to communicate with the mobile terminal according to the specified frequency band in the notification instruction from the ubiquitous network resource notification instruction identifier 1608.

The base station includes: a reservation request identifier 1603, which is connected with the transmitter and the cellular ubiquitous network resource allocator 1601 and is used to receive the uplink reservation signal; a cellular ubiquitous resource allocator 1601, which is used to receive the information in said signal from the cellular ubiquitous network resource allocator 1601 and is used to count the ubiquitous network available resource, generate the frequency band resource allocation information for the mobile terminal and the ubiquitous terminal according to the uplink reservation packet signals from all the mobile terminals, and transmit the frequency band resource allocation information; a resource allocation signal generator 1602, which is used to generate the resource allocation signal and to transmit said signal to the mobile terminal through the transmitter.

### Embodiment 5b

[FDD/TD] the cellular network adopts the FDD mode. The ubiquitous network and the cellular network are combined in the FD mode. The ubiquitous network and the cellular network use the same access mode.

The basic concept is shown in Figure 15.

The flow is shown in Figure 9 and the specific flow is as follows (the architectures of the base station, the mobile terminal and the ubiquitous terminal are shown in Figure 16):
1) the mobile terminal determines whether there are packets to be transmitted.
2) if yes, the procedure proceeds to step 3); if no, receives the slot allocation result transmitted from the base station and proceeds to step 7), wherein all the mobile terminal can receive the frequency band allocation result.
3) the uplink signal reservation unit 1604 generates a reservation request and transmits the reservation request signal to the base station through the transmitter.
4) after receiving the reservation requests from all the mobile terminals, the reservation request identifier 1603 of the base station transmits the request information to the cellular ubiquitous resource allocator 1601.
5) the cellular ubiquitous network allocator 1601 allocates the uplink frequency band resource for each mobile terminal, counts the frequency bands available to the ubiquitous network, generates the uplink frequency band resource allocation information for the mobile terminal and the ubiquitous terminal (since the number of the uplink packets to be transmitted by each mobile terminal in each frame is different, the bandwidth allocated to the ubiquitous network by the base station is different also), and then transmits the resource allocation information to the resource allocation signal generator 1602. The resource allocation signal generator 1602 generates the resource allocation signal, which is broadcasted in the downlink channel 1503, and notifies each mobile terminal of the uplink frequency band 1501 and the frequency band 1502 available to the ubiquitous network (referring to Figure 15).
6) after receiving the above notification, the mobile terminal identifies the information in the notification through the downlink instruction identifier 1606 and transmits the resource information allocated to the ubiquitous network to the ubiquitous network resource notification unit 1605. And then the mobile terminal which has packets to be transmitted can transmit the uplink packets, and after the ubiquitous terminal receives the notification of the frequency band available to the ubiquitous network, the ubiquitous resource notification instruction identifier will identify first, and if there are packets to be transmitted the communication control unit 1607 will control the ubiquitous terminal to communicate the mobile terminal in the available frequency band.
7) the mobile terminal communicates with the ubiquitous terminal at the ubiquitous network subcarrier frequency band; during the communication, the mobile terminal may store the packets transmitted from the base station to the ubiquitous terminal in the buffer1609 and then transmit the buffered packets to the ubiquitous terminal at the ubiquitous network frequency band, and may also receive the packets transmitted from the ubiquitous terminal to itself or to the base station and then store the packets to the base station in the buffer1609 and at the next uplink frequency band belonging to the mobile terminal transfers the stored packets to the base station;
8) the procedure proceeds to step 1) at the uplink frequency band of the next frame.

Here the mode of the ubiquitous terminal is the same with that of the mobile terminal and the ubiquitous terminal can receive the resource allocation information from the base station.

The mobile terminal includes: an uplink signal reservation unit 1604, which is connected with the cellular transmitter and is used to transmit the number of the uplink reservation packets; a downlink instruction identifier 1606, which is connected with the cellular receiver and is used to identify the downlink instruction from the base station; a ubiquitous network resource notification unit 1605, which is connected with the ubiquitous network transmitter 1611 and is used to receive the resource allocation information about the ubiquitous terminal, and to notify the ubiquitous network transmitter, the ubiquitous network receiver and the ubiquitous terminal of the slot for the communication; a ubiquitous network receiver 1610, which is used to receive the packets from the ubiquitous network and to store the packets; a ubiquitous network transmitter 1611, which is used to transmit the information to the ubiquitous network; a buffer1609, which is connected with said cellular transmitter, said cellular receiver and said ubiquitous network receiver and transmitter and is used to store the packets received by the ubiquitous network receiver 1610, which are transmitted from the ubiquitous network and to transmit said packets to the base station at the uplink slot of the mobile terminal through the first frequency band transmitter, or is used to store the packets received by the cellular receiver, which are transmitted from the base station to the ubiquitous terminal, and to transmit said packets to the ubiquitous terminal at the ubiquitous network slot through the ubiquitous network transmitter.

The ubiquitous terminal includes: a ubiquitous network resource notification instruction identifier 1608, which is connected with the transmitter and is used to identify the ubiquitous network resource allocation instruction from the base station; a communication control unit 1607, which is connected with the ubiquitous network resource notification instruction identifier 1608, and is used to control said ubiquitous terminal to communicate with the mobile terminal according to the specified frequency band in the notification instruction from the ubiquitous network resource notification instruction identifier 1608.

The base station includes: a reservation request identifier 1603, which is a cellular ubiquitous resource allocator 1601, which is connected with the reservation request identifier 1603, and is used to count ubiquitous network available resource, and to generate and transmit the frequency band resource allocation information for the mobile terminal and the ubiquitous terminal according to the uplink reservation packet signals from all the mobile terminals; a resource allocation signal generator 1602, which is used to generate the resource allocation signal and to transmit said signal to the mobile terminal through the transmitter.

### Embodiment 6

[FDD/PD] the cellular network adopts the FDD mode. The ubiquitous network and the cellular network are combined in the PD mode. The ubiquitous network and the cellular network use the same access mode.

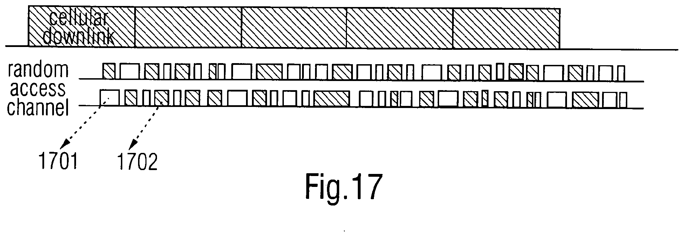

The basic concept is shown in Figure 17, wherein reference sign 1701 represents the cellular uplink channel and reference sign 1702 represents the ubiquitous network random access channel. The cellular network uplink and the ubiquitous network share one or more random access channels.

The flow is shown in Figure 11. The flow process of the present embodiment is the same with that of the embodiment 3. The differences are that in the present embodiment the cellular network adopts the FDD mode, the base station and the mobile terminal work in full duplex, and the access mode is packet multiplexing.

## Claims

1. A method for integrating a cellular network and a ubiquitous network including ubiquitous terminals with low transmitting power, wherein a communication between a mobile terminal and a base station is a duplex communication,
wherein the ubiquitous network and the cellular network are combined in a predefined communication mode,
wherein the mobile terminal in the cellular network communicates with a ubiquitous terminal by random accessing, polling or reservation, and wherein the method comprises the steps of:
(a) after receiving reservation requests from all the mobile terminals, each reservation request containing a number of uplink reservation packets for a mobile terminal, the base station (1) allocates an uplink resource for each mobile terminal, counts the resources available to the ubiquitous network, generates an uplink resource allocation information for the mobile terminal (2) and the ubiquitous terminal (3), and transmits the uplink resource allocation information in a downlink channel (203) to notify each mobile terminal of the uplink resource (201, 601) and the resource (202, 602) available to the ubiquitous network;
(b) if there are packets to be transmitted by a mobile terminal (2):
the mobile terminal (2) generates the reservation request, and
the mobile terminal (2) transmits uplink packets using the uplink resource (201, 601); and
(c) if there are no packets to be transmitted by a mobile terminal (2):
the mobile terminal (2) transmits a notification of the resource (202, 602) available for the ubiquitous network to ubiquitous terminals of the ubiquitous network,
after receiving the notification, the ubiquitous terminal (3) starts the communication with the mobile terminal (2), and the mobile terminal (2) receives packets from the ubiquitous terminal (3), processes the received packets, and stores the packets to be transferred to the base station (1) in a buffer (409), and
the mobile terminal (2) determines whether there are packets to be transmitted to the base station (1) at an uplink resource of a next frame,
wherein, in case the predefined communication mode is time division multiplexing, the uplink resource is an uplink slot, the resource (202) available to the ubiquitous network is a slot, and the notification indicates the start and end slots of the resource available for the ubiquitous network, the notification transmitted to the communication terminals when the slot begins, and wherein, in case the predefined communication mode is frequency division multiplexing, the uplink resource is an uplink frequency band, the resource (602) available to the ubiquitous network is a frequency band, and the notification is transmitted to the ubiquitous terminals at the frequency band available for the ubiquitous network.

2. A method for integrating a cellular network and a ubiquitous network including ubiquitous terminals with low transmitting power, wherein a communication between a mobile terminal and a base station is a duplex communication,
wherein the ubiquitous network and the cellular network are combined in a predefined communication mode,
wherein the mobile terminal in the cellular network communicates with the ubiquitous terminal by random accessing, polling or reservation, and
wherein the method comprises the steps of:
(a) after receiving reservation requests from all the mobile terminals, each reservation request containing a number of uplink reservation packets for a mobile terminal, the base station (1) allocates an uplink resource for each mobile terminal, counts the resources available to the ubiquitous network, generates an uplink resource allocation information for the mobile terminal (2) and the ubiquitous terminal (3), and broadcasting the uplink resource allocation information in a downlink channel (203) to notify each mobile terminal of the uplink resource (201, 601) and each of the ubiquitous terminals (3) of the resource (202, 602) available to the ubiquitous network;
(b) if that there are packets to be transmitted by a mobile terminal (2):
the mobile terminal (2) generates the reservation request, and
the mobile terminal (2) transmits uplink packets using the uplink resource (201, 601); and
(c) if there are no packets to be transmitted by a mobile terminal (2):
the ubiquitous terminal (3) starts the communication with the mobile terminal (2), and the mobile terminal (2) receives packets from the ubiquitous terminal (3), processes the received packets, and stores the packets to be transferred to the base station (1) in a buffer (409), and
the mobile terminal (2) determines whether there are packets to be transmitted to the base station (1) at an uplink resource of a next frame,
wherein, in case the predefined communication mode is time division multiplexing, the uplink resource is an uplink slot, and the resource (202, 602) available to the ubiquitous network is a slot, and wherein, in case the predefined communication mode is frequency division multiplexing, the uplink resource is an uplink frequency band, and the resource (202, 602) available to the ubiquitous network is a frequency band.

3. The method according to claim 1 or claim 2, wherein, the duplex mode is time division duplex or frequency division duplex.

4. The method according to any one from claim 1 to claim 3, wherein,
the mobile terminal (2) stores the received packets, which are transmitted from the base station (1) to the ubiquitous terminal (3), in the buffer (409), and when the mobile terminal (2) randomly accesses the ubiquitous terminal (3), it transfers the packets to the ubiquitous terminal (3).

5. A communication system, comprising:
a base station (1),
a mobile terminal (2), and
a ubiquitous terminal (3),
the base station (1), the mobile terminal (2), and the ubiquitous terminal (3) being configured to operate in accordance with the method of any one of claim 1 to claim 4.

6. The communication system of claim 5, wherein
the mobile terminal (1) comprises an uplink signal reservation unit (404), a ubiquitous network resource notification unit (405), a downlink instruction identifier (406) and a buffer(409), in which the uplink signal reservation unit (404) is connected with a transmitter,
the ubiquitous network resource notification unit (405) is connected with said transmitter,
the downlink instruction identifier (406) is connected with a receiver,
the buffer (409) is connected with said transmitter and said receiver;
the ubiquitous terminal (3) comprises a ubiquitous network resource notification instruction identifier (408) and a communication control unit (407), in which the ubiquitous network resource notification instruction identifier (408) is connected with the transmitter and the communication control unit (407), and
the base station (1) further comprises a reservation request identifier (403), a cellular resource allocator (401) and a resource allocation signal generator (402), in which the reservation request identifier (403) is connected with the transmitter and the cellular network resource allocator (401).

## Patentansprüche

1. Ein Verfahren zum Integrieren eines zellularen Netzes und eines ubiquitären Netzes mit ubiquitären Endgeräten mit niedriger Sendeleistung,
wobei eine Kommunikation zwischen einem mobilen Endgerät und einer Basisstation eine Duplex-Kommunikation ist,
wobei das ubiquitäre Netz und das zellulare Netz in einem vordefinierten Kommunikationsmodus kombiniert werden,
wobei das mobile Endgerät in dem zellularen Netz mit einem ubiquitären Endgerät durch zufälliges Zugreifen, Abfragen oder Reservierung kommuniziert, und
wobei das Verfahren folgende Schritte aufweist:
(a) nach einem Empfangen von Reservierungsanfragen von allen mobilen Endgeräten, wobei jede Reservierungsanfrage eine Anzahl von Aufwärtsverbindungs-Reservierungspaketen für ein mobiles Endgerät beinhaltet, Zuteilen einer Aufwärtsverbindungs-Ressource für jedes mobile Endgerät, Zählen der für das ubiquitäre Netz verfügbaren Ressourcen, Erzeugen einer Aufwärtsverbindungs-Ressourcenzuteilungsinformation für das mobile Endgerät (2) und das ubiquitäre Endgerät (3) und Senden der Aufwärtsverbindungs-Ressourcenzuteilungsinformation in einem Abwärtsverbindungskanal (203), um jedes mobile Endgerät über die Aufwärtsverbindungs-Ressource (201, 601) und die für das ubiquitäre Netz verfügbare Ressource (202, 602) zu benachrichtigen, durch die Basisstation (1);
(b) wenn Pakete vorliegen, die durch ein mobiles Endgerät (2) gesendet werden sollen:
Erzeugen der Reservierungsanfrage durch das mobile Endgerät (2), und
Senden von Aufwärtsverbindungspaketen unter Verwendung der Aufwärtsverbindungs-Ressource (201, 601) durch das mobile Endgerät (2); und
(c) wenn keine Pakete vorliegen, die durch das ein mobiles Endgerät (2) gesendet werden sollen:
Senden einer Benachrichtigung über die für das ubiquitäre Netz verfügbare Ressource (202, 602) durch das mobile Endgerät (2) an ubiquitäre Endgeräte des ubiquitären Netzes,
nach dem Empfangen der Benachrichtigung, Beginnen der Kommunikation mit dem mobilen Endgerät (2) durch das ubiquitäre Endgerät (3) und Empfangen von Paketen von dem ubiquitären Endgerät (3), Verarbeiten der empfangenen Pakete und Speichern der Pakete, die an die Basisstation (1) übertragen werden sollen, in einem Puffer (409) durch das mobile Endgerät (2), und
Bestimmen, ob Pakete vorliegen, die an die Basisstation (1) gesendet werden sollen, bei einer Aufwärtsverbindungs-Ressource eines nächsten Rahmens, durch das mobile Endgerät (2),
wobei in dem Fall, dass der vordefinierte Kommunikationsmodus ein Zeitteilungsmultiplexen ist, die Aufwärtsverbindungs-Ressource ein Aufwärtsverbindungs-Schlitz ist, die für das ubiquitäre Netz verfügbare Ressource (202) ein Schlitz ist und die Benachrichtigung den Anfangs- und End-Schlitz der für das ubiquitäre Netz verfügbaren Ressource anzeigt, wobei die Benachrichtigung an die Kommunikationsendgeräte gesendet wird, wenn der Schlitz beginnt, und
wobei in dem Fall, dass der vordefinierte Kommunikationsmodus ein Frequenzteilungsmultiplexen ist, die Aufwärtsverbindungs-Ressource ein Aufwärtsverbindungs-Frequenzband ist, die für das ubiquitäre Netz verfügbare Ressource (602) ein Frequenzband ist und die Benachrichtigung an die ubiquitären Endgeräte bei dem Frequenzband gesendet wird, das für das ubiquitäre Netz verfügbar ist.

2. Ein Verfahren zum Integrieren eines zellularen Netzes und eines ubiquitären Netzes mit ubiquitären Endgeräten mit geringer Sendeleistung,
wobei eine Kommunikation zwischen einem mobilen Endgerät und einer Basisstation eine Duplex-Kommunikation ist,
wobei das ubiquitäre Netz und das zellulare Netz in einem vordefinierten Kommunikationsmodus kombiniert werden,
wobei das mobile Endgerät in dem zellularen Netz mit dem ubiquitären Endgerät durch zufälliges Zugreifen, Abfragen oder Reservierung kommuniziert, und
wobei das Verfahren folgende Schritte aufweist:
(a) nach einem Empfangen von Reservierungsanfragen von allen mobilen Endgeräten, wobei jede Reservierungsanfrage eine Anzahl von Aufwärtsverbindungs-Reservierungspaketen für ein mobiles Endgerät beinhaltet, Zuteilen einer Aufwärtsverbindungs-Ressource für jedes mobile Endgerät, Zählen der für das ubiquitäre Netz verfügbaren Ressourcen, Erzeugen einer Aufwärtsverbindungs-Ressourcenzuteilungsinformation für das mobile Endgerät (2) und das ubiquitäre Endgerät (3) und Rundsenden der Aufwärtsverbindungs-Ressourcenzuteilungsinformation in einem Abwärtsverbindungskanal (203), um jedes mobile Endgerät über die Aufwärtsverbindungs-Ressource (201, 601) und jedes der ubiquitären Endgeräte (3) über die für das ubiquitäre Netz verfügbare Ressource (202, 602) zu benachrichtigen, durch die Basisstation (1);
(b) wenn Pakete vorliegen, die durch ein mobiles Endgerät (2) gesendet werden sollen:
Erzeugen der Reservierungsanfrage durch das mobile Endgerät (2), und
Senden von Aufwärtsverbindungspaketen unter Verwendung der Aufwärtsverbindungs-Ressource (201, 601) durch das mobile Endgerät (2); und
(c) wenn keine Pakete vorlieben, die durch das ein mobiles Endgerät (2) gesendet werden stollen:
Beginnen der Kommunikation mit dem mobilen Endgerät (2) durch das ubiquitäre Endgerät (3) und Empfangen von Paketen von dem ubiquitären Endgerät (3), Verarbeiten der empfangenen Pakete und Speichern der Pakete, die an die Basisstation (1) übertragen werden sollen, in einem Puffer (409) durch das mobile Endgerät (2), und
Bestimmen, ob Pakete vorliegen, die an die Basisstation (1) gesendet werden sollen, bei einer Aufwärtsverbindungs-Ressource eines nächsten Rahmens, durch das mobile Endgerät (2),
wobei in dem Fall, dass der vordefinierte Kommunikationsmodus ein Zeitteilungsmultiplexen ist, die Aufwärtsverbindungs-Ressource ein Aufwärtsverbindungs-Schlitz ist und die für das ubiquitäre Netz verfügbare Ressource (202, 602) ein Schlitz ist, und
wobei in dem Fall, dass der vordefinierte Kommunikationsmodus ein Frequenzteilungsmultiplexen ist, die Aufwärtsverbindungs-Ressource ein Aufwärtsverbindungs-Frequenzband ist und die für das ubiquitäre Netz verfügbare Ressource (202, 602) ein Frequenzband ist.

3. Das Verfahren gemäß Anspruch 1 oder Anspruch 2, bei dem der Duplexmodus ein Zeitteilungs-Duplex oder Frequenzteilungs-Duplex ist.

4. Das Verfahren gemäß einem der Ansprüche 1 bis 3, bei dem das mobile Endgerät (2) die empfangenen Pakete, die von der Basisstation (1) an das ubiquitäre Endgerät (3) gesendet werden, in dem Puffer (409) speichert, und wenn das mobile Endgerät (2) zufällig auf das ubiquitäre Endgerät (3) zugreift, dasselbe die Pakete an das ubiquitäre Endgerät (3) überträgt.

5. Ein Kommunikationssystem, das folgende Merkmale aufweist:
eine Basisstation (1),
ein mobiles Endgerät (2), und
ein ubiquitäres Endgerät (3),
wobei die Basisstation (1), das mobile Endgerät (2) und das ubiquitäre Endgerät (3) ausgebildet sind, um gemäß dem Verfahren gemäß einem der Ansprüche 1 bis 4 zu arbeiten.

6. Das Kommunikationssystem gemäß Anspruch 5, bei dem:
das mobile Endgerät (1) eine Aufwärtsverbindungs-Signalreservierungseinheit (404), eine Ubiquitäres-Netz-Ressourcen-Benachrichtigungseinheit (405), einen Abwärtsverbindungs-Befehlsidentifizierer (406) und einen Puffer (409) aufweist, bei dem die Aufwärtsverbindungs-Signalreservierungseinheit (404) mit einem Sender verbunden ist,
die Ubiquitäres-Netz-Ressourcen-Benachrichtigungseinheit (405) mit dem Sender verbunden ist,
der Abwärtsverbindungs-Befehlsidentifizierer (406) mit einem Empfänger verbunden ist,
der Puffer (409) mit dem Sender und dem Empfänger verbunden ist;
das ubiquitäre Endgerät (3) einen Ubiquitäres-Netz-Ressourcen-Benachrichtigungsbefehlsidentifizierer (408) und eine Kommunikationssteuereinheit (407) aufweist, bei dem der Ubiquitäres-Netz-Ressourcen-Benachrichtigungsbefehlsidentifizierer (408) mit dem Sender und der Kommunikationssteuereinheit (407) verbunden ist, und
die Basisstation (1) ferner einen Reservierungsanfrageidentifizierer (403), einen Zellularressourcenzuteiler (401) und einen Ressourcenzuteilungssignalerzeuger (402) aufweist, bei der der Reservierungsanfrageidentifizierer (403) mit dem Sender und dem Zellularnetzressourcenzuteiler (401) verbunden ist.

## Revendications

1. Procédé pour intégrer un réseau cellulaire et un réseau omniprésent comportant des terminaux omniprésents à faible puissance de transmission,
dans lequel une communication entre un terminal mobile et une station de base est une communication en duplex,
dans lequel le réseau omniprésent et le réseau cellulaire sont combinés dans un mode de communication prédéfini,
dans lequel le terminal mobile dans le réseau cellulaire communique avec un terminal omniprésent par un accès aléatoire, un sondage ou une réservation, et
dans lequel le procédé comprend les étapes consistant à:
(a) après avoir reçu des demandes de réservation de tous les terminaux mobiles, chaque demande de réservation contenant un nombre de paquets de réservation de liaison ascendante pour un terminal mobile, la station de base (1) attribue une ressource de liaison ascendante pour chaque terminal mobile, compte les ressources disponibles pour le réseau omniprésent, génère une information d'attribution de ressources de liaison ascendante pour le terminal mobile (2) et le terminal omniprésent (3), et transmet les informations d'attribution de ressources de liaison ascendante dans un canal de liaison descendante (203) pour notifier à chaque terminal mobile la ressource de liaison ascendante (201, 601) et la ressource (202, 602) disponible pour le réseau omniprésent;
(b) s'il y a des paquets à transmettre par un terminal mobile (2):
le terminal mobile (2) génère la demande de réservation, et
le terminal mobile (2) transmet les paquets de liaison ascendante à l'aide de la ressource de liaison ascendante (201, 601); et
(c) s'il n'y a pas de paquets à transmettre par un terminal mobile (2):
le terminal mobile (2) transmet une notification de la ressource 202, 602) disponible pour le réseau omniprésent aux terminaux omniprésents du réseau omniprésent,
après avoir reçu la notification, le terminal omniprésent (3) commence la communication avec le terminal mobile (2), et le terminal mobile (2) reçoit des paquets du terminal omniprésent (3), traite les paquets reçus et mémorise les paquets à transférer à la station de base (1) dans une mémoire-tampon (409), et
le terminal mobile (2) détermine s'il y a des paquets à transmettre à la station de base (1) à une ressource de liaison ascendante d'une trame suivante,
dans lequel, au cas où le mode de communication prédéfini est un multiplexage à répartition temporelle, la ressource de liaison ascendante est un intervalle de liaison ascendante, la ressource (202) disponible pour le réseau omniprésent est un intervalle et la notification indique le début et la fin de la ressource disponible pour le réseau omniprésent, la notification transmise aux terminaux de communication lorsque commence l'intervalle, et
dans lequel, au cas où le mode de communication prédéfini est un multiplexage par répartition en fréquence, la ressource de liaison ascendante est une bande de fréquences de liaison ascendante, la ressource (602) disponible pour le réseau omniprésent est une bande de fréquences, et la notification est transmise aux terminaux omniprésents à la bande de fréquences disponible pour le réseau omniprésent.

2. Procédé pour intégrer un réseau cellulaire et un réseau omniprésent comportant des terminaux omniprésents à faible puissance de transmission,
dans lequel une communication entre un terminal mobile et une station de base est une communication en duplex,
dans lequel le réseau omniprésent et le réseau cellulaire sont combinés dans un mode de communication prédéfini,
dans lequel le terminal mobile dans le réseau cellulaire communique avec le terminal omniprésent par un accès aléatoire, un sondage ou une préservation, et
dans lequel le procédé comprend les étapes consistant à:
(a) après avoir reçu des demandes de reservation de tous les terminaux mobiles, chaque demande de reservation contenant un nombre de paquets de réservation de liaison ascendante pour un terminal mobile, la station de base (1) attribue une ressource de liaison ascendante pour chaque terminal mobile, compte les ressources disponibles pour le réseau omniprésent, génère une information d'attribution de ressources de liaison ascendante pour le terminal mobile (2) et le terminal omniprésent (3) et diffuse les informations d'attribution de ressources de liaison ascendante dans un canal de liaison descendante (203) pour notifier à chaque terminal mobile la ressource de liaison ascendante (201, 601) et à chacun des terminaux omniprésents (3) la ressource (202, 602) disponible pour le réseau omniprésent;
(b) s'il y a des paquets à transmettre par un terminal mobile (2):
le terminal mobile (2) génère la demande de réservation, et
le terminal mobile (2) transmet des paquets de liaison ascendante à l'aide de la ressource de liaison ascendante (201, 601); et
(c) s'il n'y a pas de paquets à transmettre par un terminal mobile (2):
le terminal omniprésent (3) commence la communication avec le terminal mobile (2), et le terminal mobile (2) reçoit des paquets du terminal omniprésent (3), traite les paquets reçus et mémorise les paquets à transférer à la station de base (1) dans une mémoire-tampon (409), et
le terminal mobile (2) détermine s'il y a des paquets à transmettre à la station de base (1) à une ressource de liaison ascendante d'une trame suivante,
dans lequel, au cas où le mode de communication prédéfini est un multiplexage à répartition temporelle, la ressource de liaison ascendante est un intervalle de liaison ascendante et la ressource (202, 602) disponible pour le réseau omniprésent est un intervalle, et
dans lequel, au cas où le mode de communication prédéfini est un multiplexage à répartition en fréquence, la ressource de liaison ascendante est une bande de fréquences de liaison ascendante, et la ressource (202, 602) disponible pour le réseau omniprésent est une bande de fréquences.

3. Procédé selon la revendication 1 ou la revendication 2, dans lequel le mode en duplex est le duplex à répartition temporelle ou le duplex à répartition en fréquence.

4. Procédé selon l'une quelconque des revendications 1 à 3, dans lequel,
le terminal mobile (2) mémorise les paquets reçus, qui sont transmis de la station de base (1) au terminal omniprésent (3), dans la mémoire-tampon (409), et lorsque le terminal mobile (2) accède de manière aléatoire au terminal omniprésent (3), il transfère les paquets au terminal omniprésent (3).

5. Système de communication, comprenant:
une station de base (1),
un terminal mobile (2), et
un terminal omniprésent (3),
la station de base (1), le terminal mobile (2) et le terminal omniprésent (3) étant configurés pour fonctionner selon le procédé selon l'une quelconque de la revendication 1 à la revendication 4.

6. Système de communication selon la revendication 5, dans lequel
le terminal mobile (1) comprend une unité de réservation de signal de liaison ascendante (404), une unité de notification de ressource de réseau omniprésent (405), un identificateur d'instructions de liaison descendante (406) et une mémoire-tampon (409), où l'unité de réservation de signal de liaison ascendante (404) est connectée à un émetteur,
l'unité de notification de ressource de réseau omniprésent (405) est connectée audit émetteur,
l'identificateur d'instructions de liaison descendante (406) est connecté à un récepteur,
la mémoire-tampon (409) est connectée audit émetteur et audit récepteur;
le terminal omniprésent (3) comprend un identificateur d'instructions de notification de ressource de réseau omniprésent (408) et une unité de commande de communication (407), où l'identificateur d'instructions de notification de ressource de réseau omniprésent (408) est connecté à l'émetteur et à l'unité de commande de communication (407), et
la station de base (1) comprend par ailleurs un identificateur de demande de réservation (403), un attributeur de ressources cellulaires (401) et un générateur de signal d'attribution de ressource (402), où l'identificateur de demande de réservation (403) est connecté à l'émetteur et à l'attributeur de ressources de réseau cellulaire (401).
